(19) Europäisches Patentamt
European Patent Office
Office européen des brevets

(11) EP 4 470 780 B1

(12) EUROPEAN PATENT SPECIFICATION

(45) Date of publication and mention of the grant of the patent:
**03.12.2025 Bulletin 2025/49**

(21) Application number: **24176893.6**

(22) Date of filing: **20.05.2024**

(51) International Patent Classification (IPC):
***B41J 2/14*** *(2006.01)* ***B41J 2/16*** *(2006.01)*
***C08L 63/00*** *(2006.01)* ***C09J 159/00*** *(2006.01)*
***C08G 59/32*** *(2006.01)* ***C08G 59/66*** *(2006.01)*
***C08G 59/68*** *(2006.01)* ***C09J 163/00*** *(2006.01)*

(52) Cooperative Patent Classification (CPC):
**B41J 2/1623; B41J 2/14233; B41J 2/14274; B41J 2/1606; B41J 2/161; B41J 2/1612; C08G 59/3218; C08G 59/3227; C08G 59/66; C08G 59/686; C09J 163/00**

(54) **FLUID EJECTION HEAD, METHOD FOR PRODUCING FLUID EJECTION HEAD, FLUID EJECTION ASSEMBLY, AND FLUID EJECTION DEVICE**

FLÜSSIGKEITSAUSSTOSSKOPF, VERFAHREN ZUR HERSTELLUNG EINES FLÜSSIGKEITSAUSSTOSSKOPFES, FLÜSSIGKEITSAUSSTOSSANORDNUNG UND FLÜSSIGKEITSAUSSTOSSVORRICHTUNG

TÊTE D'ÉJECTION DE FLUIDE, PROCÉDÉ DE PRODUCTION DE TÊTE D'ÉJECTION DE FLUIDE, ENSEMBLE D'ÉJECTION DE FLUIDE ET DISPOSITIF D'ÉJECTION DE FLUIDE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **30.05.2023 JP 2023088349**

(43) Date of publication of application:
**04.12.2024 Bulletin 2024/49**

(73) Proprietor: **Ricoh Company, Ltd.**
**Tokyo 143-8555 (JP)**

(72) Inventors:
- **TODA, Tetsuya**
  **Tokyo, 143-8555 (JP)**
- **CHIBA, Ryota**
  **Tokyo, 116-8554 (JP)**
- **MATSUDA, Takuya**
  **Tokyo, 116-8554 (JP)**

(74) Representative: **Marks & Clerk LLP**
**15 Fetter Lane**
**London EC4A 1BW (GB)**

(56) References cited:
**JP-A- 2015 221 541** **JP-A- 2020 164 628**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 470 780 B1

## Description

BACKGROUND OF THE INVENTION

1. Field of the Invention

The disclosures herein generally relate to a fluid ejection head, a method for producing a fluid ejection head, a fluid ejection assembly, and a fluid ejection device.

2. Description of the Related Art

A fluid ejection head (may be referred to as an "inkjet head") includes nozzles through which ink droplets are discharged, a fluid chamber (may be referred to as a "pressurized chamber," "ejection chamber, "pressure chamber," or "pressurized fluid chamber") communicating with each nozzle, and a pressure generator (may be referred to as a "driver" or "energy generator") configured to pressurize an ink in the fluid chamber.

In the fluid ejection head, the pressure generator is driven to pressurize the ink in the fluid chamber to eject ink droplets from each nozzle. The fluid ejection head is formed by bonding a flow channel substrate for forming a flow channel (e.g., the fluid chamber) and a nozzle plate in which nozzles are formed.

An adhesive, such as a wet adhesive or a film adhesive, may be used to bond members constituting the fluid ejection head together. When a fluid chamber substrate or a nozzle plate is a silicon substrate, direct bonding or eutectic bonding using a metal material may be carried out to bond the members. When a metal material is used for a fluid chamber substrate or a nozzle plate, anodic bonding may be carried out to bond the members.

As an adhesive used to bond the members, for example, an adhesive composition including specific imidazole and an epoxy group-containing compound has been proposed for providing an adhesive having excellent chemical resistance, ink resistance, etc. (see, for example, in Japanese Unexamined Patent Application Publication No. 2006-257350). Moreover, an adhesive composition including an epoxy resin mixture including epoxy novolac and amine has been proposed for providing an adhesive having excellent resistance to UV inks (see, for example, in Japanese Unexamined Patent Application Publication No. 2015-030273). As a resin composition having high initial bonding strength and bonding reliability, which is used for a fluid ejection head, a resin composition including a specific epoxy compound, a polythiol compound, and a specific imidazole compound has been proposed (see, for example, in Japanese Unexamined Patent Application Publication No. 2015-221541).

SUMMARY OF THE INVENTION

The invention is defined in the appended claims.

BRIEF DESCRIPTION OF THE DRAWINGS

Fig. 1 is a schematic cross-sectional view illustrating an example of a fluid ejection head of the present disclosure;
Fig. 2 is a schematic enlarged cross-sectional view illustrating an example of a section A of Fig. 1;
Fig. 3 is a schematic enlarged cross-sectional view illustrating another example of the section A of Fig. 1;
Fig. 4 is a schematic view illustrating an example of the fluid ejection head of the present disclosure;
Fig. 5 is a schematic view illustrating another example of the fluid ejection head of the present disclosure;
Fig. 6 is a schematic view illustrating yet another example of the fluid ejection head of the present disclosure;
Fig. 7 is a schematic side view illustrating an example of a mechanical section of an image forming apparatus associated with the present disclosure;
Fig. 8 is a schematic plan view illustrating an example of the mechanical section of the image forming apparatus associated with the present disclosure; and
Fig. 9 is a schematic front view illustrating an example of a fluid ejection assembly of the present disclosure.

DESCRIPTION OF THE PREFERRED EMBODIMENTS

In the following, embodiments of the present invention will be described with reference to the accompanying drawings.

When two members are bonded together, it is generally important to achieve bonding of high reliability while maintaining precision of parts. In a case of a fluid ejection head, a bonding portion to bond a flow channel substrate and a

nozzle plate is formed of a member that is likely to be affected by a high frequency pressure change (of kHz order) due to ejection. It has been known that the bonding portion is therefore likely to be deteriorated by pressure caused during ejection of an ink. In recent years, various inks have been developed for various applications, other than printing on paper media, and a large amount of a solvent having a high dissolution capacity (e.g., N-methylpyrrolidone) is often included in an ink. An ink having a large amount of a solvent having a high dissolution capacity may corrode an interface between a bonding portion and a base in a fluid ejection head, thus the bonding portion may be detached or peeled off.

Specifically, there is a concern that an adhesive (resin layer) used in an ejection head of a related art, including the technologies disclosed in the above-described patent literatures (Japanese Unexamined Patent Application Publication Nos. 2006-257350, 2015-030273, and 2015-221541), may be deteriorated and peeled off as the adhesive comes into contact with an ink.

An adhesive used in an ejection head of a related art, including the technologies disclosed in the above-described patent literatures (Japanese Unexamined Patent Application Publication Nos. 2006-257350, 2015-030273, and 2015-221541), may be sometimes swollen. As the adhesive is swollen, there is also a concern that the Young's modulus is reduced to reduce the pressure inside a fluid chamber, thereby causing ejection failures.

As a result of research diligently conducted by the present inventors, the present inventors have gained the following insight. That is, a fluid ejection head including a resin layer having excellent swelling resistance and peel strength is obtained when the fluid ejection head includes a first member, a second member, the resin layer that bonds the first member and the second member together, and a flow channel to which at least part of the resin layer is exposed, where the resin layer includes a cured product of a resin composition including (A) an epoxy resin, (B) an episulfide resin, (C) a polythiol compound, and (D) at least one of hydrophobic titanium oxide or hydrophobic alumina.

One aspect of the present disclosure aims to solve the above-described various problems existing in the related art, and to provide a fluid ejection head including a resin layer having desired swelling resistance and peel strength.

According to one aspect of the present disclosure, a fluid ejection head including a resin layer having desired swelling resistance and peel strength can be provided. Specifically, the fluid ejection head including a resin layer having desired swelling resistance and peel strength achieves excellent ejection stability because the resin layer is unlikely to be swollen. Moreover, the fluid ejection head can be used over a long period because the resin layer is unlikely to be peeled off.

The present disclosure will be described in detail hereinafter.

(Liquid jet head)

The fluid ejection head of the present disclosure includes a first member, a second member, a resin layer that bonds the first member and the second member together, and a flow channel to which at least part of the resin layer is exposed. The fluid ejection head may further include other members, as necessary.

<Resin layer>

The resin layer includes a cured product of a resin composition. The resin composition includes (A) an epoxy resin, (B) an episulfide resin, (C) a polythiol compound, and (D) at least one of hydrophobic titanium oxide or hydrophobic alumina. The resin layer may further include other components, as necessary. The resin layer includes a cured product obtained by curing the resin composition.

In the present specification, the "(A) epoxy resin" may be referred to as an "(A) component" or "(A)"; the "(B) episulfide resin" may be referred to as a "(B) component" or "(B)"; the "(C) polythiol compound" may be referred to as a "(C) component" or "(C)"; and the "(D) at least one of hydrophobic titanium oxide or hydrophobic alumina" may be referred to as a "(D) component" or "(D)."

<< (A) epoxy resin>>

The (A) epoxy resin is not particularly limited, and any epoxy resin available in the related art may be used. Examples of the (A) epoxy resin include polyglycidyl ether compounds of mononuclear polyvalent phenols, polyglycidyl ether compounds of polyvalent phenols, glycidyl ester compounds of aliphatic, aromatic, or alicyclic polybasic acids, glycidyl methacrylate homopolymers or copolymers, glycidylamino group-containing epoxy compounds, epoxy compounds of cyclic olefin compounds, epoxidized conjugated diene polymer, and heterocyclic compounds.

The above-listed (A) epoxy resins may be used alone or in combination.

-Polyglycidyl ether compounds of mononuclear polyvalent phenols-

Examples of a mononuclear polyvalent phenol in the polyglycidyl ether compounds of mononuclear polyvalent

phenols include hydroquinone, resorcinol, pyrocatechol, and phloroglucinol.

-Polyglycidyl ether compounds of polyvalent phenols-

Examples of the polyglycidyl ether compounds of polyvalent phenols include bisphenol-based epoxy resins, biphenol-based epoxy resins, novolac-based epoxy resins, triphenylmethane-based epoxy resins, tetraphenylethane-based epoxy resins, dicyclopentadiene-phenol addition reaction-type epoxy resins, biphenylene-phenol addition-type epoxy resins, and naphthalene-based epoxy resins.
Examples of the bisphenol-based epoxy resins include polyglycidyl ethers of methylene bisphenol (bisphenol F), methylene bis(orthocresol), ethylidene bisphenol, isopropylidene bisphenol (bisphenol A), isopropylidene bis(orthocresol), tetrabromobisphenol A, thiobisphenol, sulfonyl bisphenol, and oxybisphenol.
Examples of the novolac-based epoxy resins include polyglycidyl ethers of phenol novolac, orthocresol novolac, ethyl phenol novolac, butyl phenol novolac, octyl phenol novolac, resorcinol novolac, and bisphenol A novolac.

-Polyglycidyl ether compounds of polyvalent alcohols-

Examples of the polyvalent alcohols in the polyglycidyl ether compounds of polyvalent alcohols include ethylene glycol, propylene glycol, butylene glycol, hexanediol, polyglycol, neopentyl glycol, dicyclopentadiene dimethanol, cyclohexane dimethanol, norbornene dimethanol, thiodiglycol, glycerin, trimethylolpropane, pentaerythritol, sorbitol, and bisphenol A-ethylene oxide adducts.

-Glycidyl ester compounds of aliphatic, aromatic, or alicyclic polybasic acids-

Examples of a polybasic acid in the glycidyl ester compounds of aliphatic, aromatic, or alicyclic polybasic acids include maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid, and endomethylene tetrahydrophthalic acid.

-Glycidylamino group-containing epoxy compounds-

Examples of the glycidylamino group-containing epoxy compounds include glycidylamino compounds, such as N,N-diglycidylaniline, bis(4-(N-methyl-N-glycidylamino)phenyl)methane, diglycidyl-o-toluidine, N,N-bis(2,3-epoxypropyl)-4-(2,3-epoxypropoxy)aniline, N,N,N',N'-tetra(2,3-epoxypropyl)-4,4'-diaminodiphenylmethane, N,N-bis(2,3-epoxypropyl)-4-(2,3-epoxypropoxy)-2-methylaniline, 1,3-bis(N,N-diglycidylaminoethyl)cyclohexane, N,N,N',N'-tetraglycidyl-m-xylenediamine, and 1,3,4,6-tetraglycidylglycoluril.

-Epoxy compounds of cyclic olefin compounds-

Examples of the epoxy compounds of the cyclic olefin compounds include vinylcyclohexene diepoxide, dicyclopentadiene diepoxide, 3,4-epoxycyclohexylmethyl-3,4-epoxycyclohexane carboxylate, 3,4-epoxy-6-methylcyclohexylmethyl-6-methylcyclohexane carboxylate, bis(3,4-epoxy-6-methylcyclohexylmethyl)adipate, and a 1,2-epoxy-4-(2-oxiranyl)cyclohexane adduct of 2,2-bis(hydroxymethyl)-1-butanol.

-Epoxidized conjugated diene polymers-

Examples of the epoxidized conjugated diene polymers include epoxidized polybutadiene, and epoxidized styrene-butadiene copolymers.

-Heterocyclic compounds-

Examples of the heterocyclic compounds include triglycidyl isocyanurate.
Among the above-listed examples, the (A) epoxy resin includes at least one selected from the group consisting of a polyglycidyl ether compound of a polyvalent phenol compound, a glycidylamino group-containing epoxy compound, and a polyglycidyl ether compound of dicyclopentadiene dimethanol for achieving desired adhesion to metal surfaces.
It is important to reduce hydrophilicity of the (A) epoxy resin and to increase three-dimensional crosslinks in order to reduce permeation of an ink to minimize swelling of the resin layer. In view of swelling resistance, a glycidylamino group-containing epoxy compound or a polyglycidyl ether compound of a polyvalent phenol compound, such as novolac resins, is preferably used. It is also important to consider wettability or compatibility (adsorption) of the resin layer to members. To

this end, the (A) epoxy resin may be a mixture of a plurality of materials. A resin having the smaller functional group equivalent weight and the higher crosslink density is likely to be a resin having the higher elasticity. The above-listed materials may be appropriately mixed for use to consider swelling with an ink or potential cleavage of hydrogen bonds.

The (A) epoxy resin may be a resin produced by internally crosslinking with a prepolymer having an isocyanate terminal, or a resin produced by polymerizing a polyvalent active hydrogen compound (e.g., polyvalent phenol, polyamine, a carbonyl group-containing compound, and polyphosphoric acid ester).

An amount of the (A) epoxy resin is not particularly limited, and may be appropriately set according to the intended purpose. The amount of the (A) epoxy resin is preferably 30 parts by mass or greater and 90 parts by mass or less relative to a total amount of the resin layer formed of the resin composition.

The amount of the (A) epoxy resin in the range of 30 parts by mass or greater relative to a total amount of the resin layer formed of the resin composition is preferred because a desired crosslink density is achieved. The amount of the (A) epoxy resin in the range of 90 parts by mass or less relative to a total amount of the resin layer formed of the resin composition is preferred because stress that may be generated by cure shrinkage can be reduced.

An epoxy equivalent weight of the (A) epoxy resin is not particularly limited, and may be appropriately selected according to the intended purpose. The epoxy equivalent weight is preferably 50 or greater and 500 or less, because the above-mentioned range of the epoxy equivalent weight can be easily matched with an active hydrogen equivalent weight of an additive reaction-type curing agent at an equivalent weight ratio of 1:1, thereby achieving a high crosslink density. The high crosslink density of a resultant resin layer can reduce a swelling rate against an ink.

A measuring method for the epoxy equivalent weight is not particularly limited, and may be appropriately selected according to the intended purpose. For example, the epoxy equivalent weight can be measured by the method described in JIS K7236:2001.

As the (A) epoxy resin, an appropriately synthesized epoxy resin may be used, or a commercially available product may be used. Examples of the commercially available product of the (A) epoxy resin include: DENACOL EX-313, DENACOL EX-314, DENACOL EX-321, DENACOL EX-411, DENACOL EX-421, DENACOL EX-512, DENACOL EX-521, DENACOL EX-611, DENACOL EX-612, DENACOL EX-614, DENACOL EX-622, DENACOL EX-830, DENACOL EX-832, DENACOL EX-841, DENACOL EX-861, DENACOL EX-920, DENACOL EX-931, DENACOL EX-201, DENACOL EX-711, and DENACOL EX-721 (all available from Nagase ChemteX Corporation); EPOLIGHT 200E, EPOLIGHT 400E, EPOLIGHT 70P, and EPOLIGHT 200P, EPOLIGHT 400P (all available from KYOEISHA CHEMICAL Co., Ltd.); ADEKA RESIN EP-3900S, ADEKA RESIN EP-3950S, ADEKA RESIN EP-4088S, ADEKA RESIN EP-4088L, ADEKA RESIN EP-4080E, ADEKA RESIN EP-4000, ADEKA RESIN EP-4005, ADEKA RESIN EP-4100, and ADEKA RESIN EP-4901 (all available from ADEKA CORPORATION); OGSOL PG-100, OGSOL EG-200, OGSOL EG-210, and OGSOL EG-250 (all available from Osaka Gas Chemicals Co., Ltd.); YD Series, YDF Series, YDPN Series, and TDCN Series (all available from NIPPON STEEL Chemical & Material Co., Ltd.); CELLOXIDE 2021P and CELLOXIDE 2081 (both available from Daicel Corporation); TECHMORE VG-3101L (available from PRINTEC CORPORATION); EOCN-1020, EOCN-102S, EOCN-103S, EOCN-104S, XD-1000, NC-3000, NC-3500, EPPN-501H, EPPN-501HY, EPPN-502H, and NC-7000L (all available from Nippon Kayaku Co., Ltd.); YX8800 (available from Mitsubishi Chemical Corporation); HP4032, HP4032D, and HP4700 (all available from DIC Corporation); and TETRAD-C and TETRAD-X (both available from MITSUBISHI GAS CHEMICAL COMPANY, INC.).

<<(B) Episulfide resin>>

The (B) episulfide resin is not particularly limited as long as the episulfide resin has an episulfide ring, and may be appropriately selected according to the intended purpose. Examples of the (B) episulfide resin include resins obtained by substituting part of or all of oxygen atoms in the (A) epoxy resin with sulfur atoms.

Examples of the (B) episulfide resin include linear aliphatic episulfide resins, alicyclic episulfide resins, and aromatic episulfide resins.

The above-listed examples of the (B) episulfide resins may be used alone or in combination. The (B) episulfide resin is not limited to the above-listed explanatory compounds.

-Linear aliphatic episulfide resins-

Specific examples of the linear aliphatic episulfide resins include bis(2,3-epithiopropyl)sulfide, bis(2,3-epithiopropylthio)methane, 1,2-bis(2,3-epithiopropylthio)ethane, 1,2-bis(2,3-epithiopropylthio)propane, 1,3-bis(2,3-epithiopropylthio)propane, 1,3-bis(2,3-epithiopropylthio)-2-methylpropane, 1,4-bis(2,3-epithiopropylthio)butane, 1,4-bis(2,3-epithiopropylthio)-2-methylbutane, 1,3-bis(2,3-epithiopropylthio)butane, 1,5-bis(2,3-epithiopropylthio)pentane, 1,5-bis(2,3-epithiopropylthio)-2-methylpentane, 1,5-bis(2,3-epithiopropylthio)-3-thiapentane, 1,6-bis(2,3-epithiopropylthio)hexane, 1,6-bis(2,3-epithiopropylthio)-2-methylhexane, 3,8-bis(2,3-epithiopropylthio)-3,6-trithiaoctane, 1,2,3-tris(2,3-epithiopropylthio)propane, 2,2-bis(2,3-epithiopropylthio)-1,3-bis(2,3-epithiopropylthiomethyl)propane, 2,2-bis(2,3-epithiopropylthiomethyl)-1-(2,3-epithiopropylthio)butane, 1,5-bis(2,3-epithiopropylthio)-2-(2,3-epithiopropylthiomethyl)-3-thiapentane, 1,5-bis(2,3-epithiopropylthio)-2,4-bis(2,3-epithiopropylthiomethyl)-3-thiapentane, 1-(2,3-epithiopropylthio)-2,2-bis(2,3-epithiopropylthiomethyl)-4-thiahexane, 1,5,6-tris(2,3-epithiopropylthio)-4-(2,3-epithiopropylthiomethyl)-3-thiahexane, 1,8-bis(2,3-epithiopropylthio)-4-(2,3-epithiopropylthiomethyl)-3,6-dithiaoctane, 1,8-bis(2,3-epithiopropylthio)-4,5-bis(2,3-epithiopropylthiomethyl)-3,6-dithiaoctane, 1,8-bis(2,3-epithiopropylthio)-4,4-bis(2,3-epithiopropylthiomethyl)-3,6-dithiaoctane, 1,8-bis(2,3-epithiopropylthio)-2,5-bis(2,3-epithiopropylthiomethyl)-3,6-dithiaoctane, 1,8-bis(2,3-epithiopropylthio)-2,4,5-tris(2,3-epithiopropylthiomethyl)-3,6-dithiaoctane, 1,1,1-tris[{2-(2,3-epithiopropylthio)ethyl}thiomethyl]-2-(2,3-epithiopropylthio)ethane, 1,1,2,2-tetrakis[{2-(2,3-epithiopropylthio)ethyl}thiomethyl]ethane, 1,11-bis(2,3-epithiopropylthio)-4,8-bis(2,3-epithiopropylthiomethyl)-3,6,9-trithiaundecane, 1,11-bis(2,3-epithiopropylthio)-4,7-bis(2,3-epithiopropylthiomethyl)-3,6,9-trithiaundecane, and 1,11-bis(2,3-epithiopropylthio)-5,7-bis(2,3-epithiopropylthiomethyl)-3,6,9-trithiaundecane.

-Alicyclic episulfide resins-

Specific examples of the alicyclic episulfide resins include 1,3-bis(2,3-epithiopropylthio)cyclohexane, 1,4-bis(2,3-epithiopropylthio)cyclohexane, 1,3-bis(2,3-epithiopropylthiomethyl)cyclohexane, 1,4-bis(2,3-epithiopropylthiomethyl)cyclohexane, 2,5-bis(2,3-epithiopropylthiomethyl)-1,4-dithiane, 2,5-bis[{2-(2,3-epithiopropylthio)ethyl}thiomethyl]-1,4-dithiane, 2,5-bis(2,3-epithiopropylthiomethyl)-2,5-dimethyl-1,4-dithiane, 2,2-bis(4-(2,3-epithiopropoxy)cyclohexyl)propane, bis(4-(2,3-epithiopropoxy)cyclohexyl)methane, 4,8-bis(4-(2,3-epithiopropoxymethyl)-tricyclo [5.2.1.$0^{2.6}$]decane, 3,9-bis(4-(2,3-epithiopropoxymethyl)-tricyclo[5.2.1.$0^{2.6}$]decane, 3,8-bis(4-(2,3-epithiopropoxymethyl)-tricyclo[5.2.1.02.6]decane, 4,8-bis(4-(2,3-epithiopropoxy)-tricyclo[5.2.1.$0^{2.6}$]decane, 3,9-bis(4-(2,3-epithiopropoxy)-tricyclo[5.2.1.$0^{2\cdot 6}$]decane, 3,8-bis(4-(2,3-epithiopropoxy)-tricyclo[5.2.1.$0^{2\cdot 6}$]decane, 1,1,1-tris-(4-(2,3-epithiopropoxy)cyclohexyl)ethane, 1-(2-(2,3-epithiopropoxy)cyclohexyl)-1,1-bis-(4-(2,3-epithiopropoxy)cyclohexyl)ethane, and 1,1,2,2-tetrakis-(4-(2,3-epithiopropoxy)cyclohexyl)ethane.

-Aromatic episulfide resins-

Specific examples of the aromatic episulfide resin include 1,2-bis(2,3-epithiopropylthio)benzene, 1,3-bis(2,3-epithiopropylthio)benzene, 1,4-bis(2,3-epithiopropylthio)benzene, 1,2-bis(2,3-epithiopropylthiomethyl)benzene, 1,3-bis(2,3-epithiopropylthiomethyl)benzene, 1,4-bis(2,3-epithiopropylthiomethyl)benzene, bis{4-(2,3-epithiopropylthio) phenyl}methane, 2,2-bis{4-(2,3-epithiopropylthio)phenyl}propane, bis{4-(2,3-epithiopropylthio)phenyl}sulfide, bis {4-(2,3-epithiopropylthio)phenyl}sulfone, and 4,4'-bis(2,3-epithiopropylthio)biphenyl.

The (B) episulfide resin preferably includes an aromatic ring or an alicyclic structure for achieving desired fluid resistance and swelling resistance of a cured product. Specifically, the (B) episulfide resin is preferably an alicyclic episulfide resin or an aromatic episulfide resin for achieving desired fluid resistance and swelling resistance of a cured product.

An amount of the (B) episulfide resin is not particularly limited, and may be appropriately selected according to the intended purpose. The amount of the (B) episulfide resin is preferably 10 parts by mass or greater and 300 parts by mass or less, more preferably 20 parts by mass or greater and 200 parts by mass or less, and yet more preferably 30 parts by mass or greater and 100 parts by mass or less, relative to 100 parts by mass of a sum of an amount of the (A) component and an amount of the below-described (C) component in the resin layer.

The amount of the (B) episulfide resin in the range of 10 parts by mass or greater relative to a sum of an amount of the (A) component and an amount of the below-described (C) component in the resin layer is preferred because desired swelling resistance is achieved.

The amount of the (B) episulfide resin in the range of 300 parts by mass or less relative to a sum of an amount of the (A) component and an amount of the below-described (C) component in the resin layer is preferred because desired peel strength is achieved.

As the (B) episulfide resin, an appropriately synthesized product may be used, or a commercially available product may be used.

A synthesis method of the (B) episulfide resin is not particularly limited. For example, the (B) episulfide resin can be easily obtained by substituting oxygen atoms of the (A) epoxy resin with sulfur atoms using a catalyst, such as potassium thiocyanate.

Examples of the commercially available product of the (B) episulfide resin include hydrogenated bisphenol A-bisepisulfide (product name) available from Taoka Chemical Co., Ltd.

<<(C) Polythiol compound>>

The (C) polythiol compound is a compound functioning as a curing agent.

The (C) polythiol compound is not particularly limited, and may be appropriately selected according to the intended purpose. Examples of the (C) polythiol compound include aliphatic polythiol compounds, aromatic polythiol compounds, ether bond-containing polythiol compounds, ester bond-containing polythiol compounds, and polythiol compounds including other special structures. The above-listed compounds may be modified through an addition reaction with an epoxy compound and used as the (C) polythiol compound.

Specific examples of the (C) polythiol compound include pentaerythritol tetrakis(3-mercaptopropionate), pentaerythritol tetrakis(thioglycolate), dipentaerythritolhexakis(3-mercaptopropionate), dipentaerythritol hexakis(3-mercaptobutylate), 1,3,4,6-tetrakis(2-mercaptoethyl)-1,3,4,6-tetraaza-octahydropentalene-2,5-dione, 1,3,5-tris(3-mercaptopropyl)-1,3,5-triazine-2,4,6(1H,3H,5H)-trionew, 4-mercaptomethyl-1,8-dimercapto-3,6-dithiaoctane, 4,8-dimercaptomethyl-1,11-dimercapto-3,6,9-trithiaundecane, 4,7-dimercaptomethyl-1,11-dimercapto-3,6,9-trithiaundecane, 5,7-dimercaptomethyl-1,11-dimercapto-3,6,9-trithiaundecane, 1,3,4,6-tetrakis(2-mercaptoethyl)glycoluril, 1,2,3-tris(mercaptomethylthio)propane, 1,2,3-tris(2-mercaptoethylthio)propane, 1,2,3-tris(3-mercaptopropylthio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl)methane, tetrakis(2-mercaptoethylthiomethyl)methane, tetrakis(3-mercaptopropylthiomethyl)methane, 1,1,3,3-tetrakis(mercaptomethylthio)propane, 1,1,2,2-tetrakis(mercaptomethylthio)ethane, 4,6-bis(mercaptomethylthio)-1,3-dithiane, 1,1,5,5-tetrakis(mercaptomethylthio)-3-thiapentane, 1,1,6,6-tetrakis(mercaptomethylthio)-3,4-dithiahexane, 2,2-bis(mercaptomethylthio)ethane thiol, 3-mercaptomethylthio-1,7-dimercapto-2,6-dithiaheptane, 3,6-bis(mercaptomethylthio)-1,9-dimercapto-2,5,8-trithianonane, 3-mercaptomethylthio-1,6-dimercapto-2,5-dithiahexane, 1,1,9,9-tetrakis(mercaptomethylthio)-5-(3,3-bis(mercaptomethylthio)-1-thiapropyl)3,7-dithianonane, tris(2,2-bis(mercaptomethylthio)ethyl)methane, tris(4,4-bis(mercaptomethylthio)-2-thiabutyl)methane, tetrakis(2,2-bis(mercaptomethylthio)ethyl)methane, tetrakis(4,4-bis(mercaptomethylthio)-2-thiabutyl)methane, 3,5,9,11-tetrakis(mercaptomethylthio)-1,13-dimercapto-2,6,8,12-tetrathiatridecane, 3,5,9,11,15,17-hexakis(mercaptomethylthio)-1,19-dimercapto-2,6,8,12,14,18-hexathianonadecane, 9-(2,2-bis(mercaptomethylthio)ethyl)-3,5,13,15-tetrakis(mercaptomethylthio)-1,17-dimercapto-2,6,8,10,12,16-hexathiaheptadecane, 3,4,8,9-tetrakis(mercaptomethylthio)-1,11-dimercapto-2,5,7,10-tetrathiaundecane, 3,4,8,9,13,14-hexakis(mercaptomethylthio)-1,16-dimercapto-2,5,7,10,12,15-hexathiahexadecane, 8-[bis(mercaptomethylthio)methyl]-3,4,12,13-tetrakis(mercaptomethylthio)-1,15-dimercapto-2,5,7,9,11,14-hexathiapentadecane, 4,6-bis[3,5-bis(mercaptomethylthio)-7-mercapto-2,6-dithiaheptylthio]-1,3-dithiane, 4-[3,5-bis(mercaptomethylthio)-7-mercapto-2,6-dithiaheptylthio]-6-mercaptomethylthio-1,3-dithiane, 1,1-bis[4-(6-mercaptomethylthio)-1,3-dithianylthio]-1,3-bis(mercaptomethylthio)propane, 1-[4-(6-mercaptomethylthio)-1,3-dithianylthio]-3-[2,2-bis(mercaptomethylthio)ethyl]-7,9-bis(mercaptomethylthio)-2,4,6,10-tetrathiaundecane, 1,5-bis[4-(6-mercaptomethylthio)-1,3-dithianylthio]-3-[2-(1,3-dithiethanyl) ]methyl-2,4-dithiapentane, 3-[2-(1,3-dithiethanyl)]methyl-7,9-bis(mercaptomethylthio)-1,11-dimercapto-2,4,6,10-tetrathiaundecane, 9-[2-(1,3-dithiethanyl)]methyl-3,5,13,15-tetrakis(mercaptomethylthio)-1,17-dimercapto-2,6,8,10,12,16-hexathiaheptadecane, 3-[2-(1,3-dithiethanyl)]methyl-7,9,13,15-tetrakis(mercaptomethylthio)-1,17-dimercapto-2,4,6,10,12,16-hexathiaheptadecane, 3,7-bis[2-(1,3-dithiethanyl)]methyl-1,9-dimercapto-2,4,6,8-tetrathianonane, 4,6-bis{3-[2-(1,3-dithiethanyl)]methyl-5-mercapto-2,4-dithiapentylthio}-1,3-dithiane, 4,6-bis[4-(6-mercaptomethylthio)-1,3-dithianylthio]-6-[4-(6-mercaptomethylthio)-1,3-dithianylthio]-1,3-dithiane, 4-[3,4,8,9-tetrakis(mercaptomethylthio)-11-mercapto-2,5,7,10-tetrathiaundecyl]-5-mercaptomethylthio-1,3-dithiolane, 4,5-bis[3,4-bis(mercaptomethylthio)-6-mercapto-2,5-dithiahexylthio]-1,3-dithiolane, 4-[3,4-bis(mercaptomethylthio)-6-mercapto-2,5-dithiahexylthio]-5-mercaptomethylthio-1,3-dithiolane, 4-[3-bis(mercaptomethylthio)methyl-5,6-bis(mercaptomethylthio)-8-mercapto-2,4,7-trithiaoctyl]-5-mercaptomethylthio-1,3-dithiolane, 2-{bis[3,4-bis(mercaptomethylthio)-6-mercapto-2,5-dithiahexylthio]methyl}-1,3-dithiethane, 2-[3,4-bis(mercaptomethylthio)-6-mercapto-2,5-dithiahexylthio]mercaptomethylthiomethyl-1,3-dithiethane, 2-[3,4,8,9-tetrakis(mercaptomethylthio)-11-mercapto-2,5,7,10-tetrathiaundecylthio]mercaptomethylthiomethyl-1,3-dithiethane, 2-[3-bis(mercaptomethylthio)methyl-5,6-bis(mercaptomethylthio)-8-mercapto-2,4,7-trithiaoctyl]mercaptomethylthiomethyl-1,3-dithiaethane, 4,5-bis{1-[2-(1,3-dithiethanyl)]-3-mercapto-2-thiapropylthio}-1,3-dithiolane, 4-{1-[2-(1,3-dithiethanyl)]-3-mercapto-2-thiapropylthio}-5-[1,2-bis(mercaptomethylthio)-4-mercapto-3-thiabutylthio]-1,3-dithiolane, 2-{bis[4-(5-mercaptomethylthio-1,3-dithiolanyl)thio]methyl}-1,3-dithiethane, and 4-[4-(5-mercaptomethylthio-1,3-dithiolanyl)thio]-5-{1-[2-(1,3-dithiethanyl)]-3-mercapto-2-thiapropylthio}-1,3-dithiolane.

The (C) polythiol compound preferably includes four or more thiol groups in view of curability of a resultant resin composition and a large number of crosslink points in a cured product of the resin composition.

An amount of the (C) polythiol compound is not particularly limited, and may be appropriately selected according to the intended purpose. As the amount of the (C) polythiol compound, an equivalent weight of a thiol group in the (C) polythiol compound is preferably 0.2 or greater and 2.0 or less, more preferably 0.8 or greater and 1.2 or less, and yet more preferably 0.9 or greater and 1.1 or less relative to 1 equivalent weight of an epoxy group in the (A) component.

The amount of the (C) polythiol compound determined by the equivalent weight of the thiol group in the range of 0.2 or greater relative to 1 equivalent weight of the epoxy group in the (A) component is preferred because desired low-temperature curability is obtained.

The amount of the (C) polythiol compound determined by the equivalent weight of the thiol group in the range of 2.0 or less relative to 1 molar equivalent weight of the epoxy group in the (A) component is preferred because desired thermal resistance and fluid resistance of a cured product of a resultant resin composition are achieved.

As the (C) polythiol compound, an appropriately synthesized product may be used, or a commercially available product may be used. Examples of the commercially available product of the (C) polythiol compound include TS-G (product name) (polyfunctional thiol-based epoxy resin curing agent/crosslinking agent), available from SHIKOKU CHEMICALS CORPORATION; and DPMP (product name) (3-mercaptopropionic acid ester of dipentaerythritol), and PEMP (product name) (2,2-bis[[(3-mercaptopropionyl)oxy]methyl]trimethylene bis[3-mercaptopropionate]), both available from SC Organic Chemical Co., Ltd.; PETG (product name) (pentaerythritol tetrakisthioglycolate), available from YODO KAGAKU CO., LTD.

<<(D) At least one of hydrophobic titanium oxide or hydrophobic alumina>>

A hydrophobization treatment for obtaining a hydrophobic titanium oxide and/or hydrophobic alumina serving as the (D) component can be performed by any method available in the related art. Examples of the method available in the related art include: a dry method; a wet method using a solvent, such as a solvent, an aqueous solvent, and a mixture of a solvent and water; and a mechanochemical method. As a specific example, hydrophobization can be performed, for example, by dissolving an organic hydrophobization agent in an organic solvent (e.g., toluene and alcohol), sufficiently mixing the resultant solution with titanium oxide and/or alumina serving as a raw material, removing the organic solvent from the resultant mixture through distillation or any other methods, performing a heat treatment, and grinding the resultant solid matter.

The organic hydrophobization agent is not particularly limited, and may be appropriately selected according to the intended purpose. The organic hydrophobization agent is preferably an alkylsilyl hydrophobization agent, such as n-propyltrimethoxysilane, n-butyltrimethoxysilane, n-octyltrimethoxysilane, and n-decyltrimethoxysilane. Namely, the (D) component is preferably titanium oxide including an alkylsilane moiety, or alumina including an alkylsilane moiety, or both.

The (D) component is preferably titanium oxide including an alkylsilane moiety because desired swelling resistance and peel strength of a resultant resin layer can be achieved and retained after using the fluid ejection head.

An amount of the hydrophobization agent used for the titanium oxide and/or alumina may be appropriately adjusted according to the organic hydrophobization agent to be used. The amount of the hydrophobization agent is preferably 1 part by mass or greater, more preferably 2 parts by mass or greater, and yet more preferably 5 parts by mass or greater, relative to 100 parts by mass of a total amount of the titanium oxide and/or alumina after the hydrophobization treatment.

The amount of the hydrophobization agent is preferably 80 parts by mass or less, more preferably 70 parts by mass or less, and yet more preferably 60 parts by mass or less, relative to 100 parts by mass of a total amount of the titanium oxide and/or alumina after the hydrophobization treatment.

A mean primary-particle diameter of the (D) component is substantially identical to a mean primary-particle diameter of the titanium oxide and/or alumina serving as a raw material.

The maximum particle diameter of the (D) component is preferably 0.1 μm or greater and 1.0 μm or less because bonding can be achieved with a resin layer having a film thickness of 1 μm or less. A measurement method for the maximum particle diameter of the (D) component is not particularly limited. For example, the maximum particle diameter of the (D) component can be measured by a laser diffraction particle size distribution analyzer.

An amount of the (D) component is not particularly limited, and may be appropriately selected according to the intended purpose. The amount of the (D) component is preferably 0.1 parts by mass or greater and 20 parts by mass or less, more preferably 1 part by mass or greater and 15 parts by mass or less, and yet more preferably 2 parts by mass or greater and 7 parts by mass, relative to 100 parts by mass of a sum of an amount of the (A) component, an amount of the (B) component, and an amount of the (C) component in the resin layer.

The amount of the (D) component in the range of 0.1 parts by mass or greater relative to a sum of an amount of the (A) component, an amount of the (B) compound, and an amount of the (C) component is preferred because desired storage stability of a resin composition and peel strength of a resin layer after being immersed in an ink can be achieved.

The amount of the (D) component in the range of 20 parts by mass or less relative to a sum of an amount of the (A) component, an amount of the (B) compound, and an amount of the (C) component is preferred because desired curability of a resin composition, desired swelling resistance of a cured product of the resin composition, and peel strength of a resin layer after being immersed in an ink can be achieved.

As the (D) component, an appropriately synthesized product may be used, or a commercially available product may be used. Examples of the commercially available product of the hydrophobic titanium oxide serving as the (D) component include: AEROXIDE T805 (product name) and AEROXIDE NKT90 (product name) (both available from Evonik Japan Co., Ltd.); ST Series (available from Titan Kogyo, Ltd.); TAF Series (anatase form) (available from Fuji

Titanium Industry Co., Ltd.); JMT Series (available from TAYCA CORPORATION); and IT-S Series (available from ISHIHARA SANGYO KAISHA, LTD.). Examples of the commercially available product of the hydrophobic alumina serving as the (D) component include AEROXIDE AluC805 (available from Evonik Japan Co., Ltd.).

<<Other components>>

The resin composition of the present disclosure may further include other components, in addition to the (A) to (D) components. The above other components are not particularly limited, and may be appropriately selected according to the intended purpose. Examples of the above other components include a curing catalyst.

-Curing catalyst-

The curing catalyst is not particularly limited, and may be appropriately selected according to the intended purpose. Examples of the curing catalyst include phosphine compounds, phosphonium salts, imidazoles, imidazole salts, amines, quaternary ammonium salts, ureas, complex compounds between boron trifluoride and amines or ether compounds, and amine-based latent curing agents of polyepoxy compounds and/or isocyanate addicts of amine compounds each including one or more active hydrogens, or of polyepoxy compounds and/or isocyanate addicts of amine compounds each including one or more active hydrogens combined with a phenolic resin.

Examples of the phosphine compounds include triphenylphosphine.

Examples of the phosphonium salts include tetraphenylphosphonium bromide.

Examples of the imidazoles include 2-methylimidazole, 2-phenylimidazole, 2-ethyl-4-methylimidazole, 2-undecylimidazole, 1-cyanoethyl-2-methylimidazole, 1-{3- [(3-trimethoxysilyl)propylaminocarbonylamino]propyl}-2-methylimidazole, 1-[3-trimethoxysilylpropylaminomethyl]-4-methylimidazole, 1-[3-(trimethoxysilylpropyl)]imidazole, and 1-[3-(trimethoxysilylpropyl)]imidazole.

Examples of the imidazole salts include salts between imidazoles and trimellitic acids, isocyanuric acid, or boron.

Examples of the amines include benzyldimethylamine and 2,4,6-tris(dimethylaminomethyl)phenol.

Examples of the quaternary ammonium salts include trimethylammonium chloride.

Examples of the ureas include 3-(p-chlorophenyl)-1,1-dimethylurea, 3-(3,4-dichlorophenyl)-1,1-dimethylurea, 3-phenyl-1,1-dimethylurea, isophorone diisocyanate-dimethylurea, and tolylene diisocyanate-dimethylurea.

The amine compound including one or more active hydrogens, which can be used to constitute the amine-based latent curing agent, is not particularly limited, and may be appropriately selected according to the intended purpose. Examples of the amine compounds including one or more active hydrogens include alkylene diamines, polyalkyl polyamines, alicyclic polyamines, aromatic polyamines, guanamines, imidazoles, and dihydrazides.

Examples of the alkylene diamines include ethylene diamine, 1,2-diaminopropane, 1,3-diaminopropane, 1,3-diaminobutane, 1,4-diaminobutane, and hexamethylene diamine.

Examples of the polyalkyl polyamines include diethylenetriamine, triethylenetriamine, and tetraethylenepentamine.

Examples of the alicyclic polyamines include 1,4-diaminocyclohexane, 1,3-diaminocyclohexane, 1,3-diaminomethylcyclohexane, 1,2-diaminocyclohexane, 1,4-diamino-3,6-diethylcyclohexane, 4,4'-diaminodicyclohexylmethane, 1,3-bis(aminomethyl)cyclohexane, 1,4-bis(aminomethyl)cyclohexane, 4,4'-diaminodicyclohexylpropane, bis(4-aminocyclohexyl)sulfone, 4,4'-diaminodicyclohexylether, 2,2'-dimethyl-4,4'-diaminodicyclohexylmethane, isophoronediamine, and norbornenediamine.

Examples of the aromatic polyamines include m-xylenediamine, diaminodiphenylmethane, diaminodiphenylsulfone, diethyltoluenediamine, 1-methyl-3,5-diethyl-2,4-diaminebenzene, 1-methyl-3,5-diethyl-2,6-diaminobenzene, 1,3,5-triethyl-2,6-diaminobenzene, 3,3'-diethyl-4,4'-diaminodiphenylmethane, and 3,5,3',5'-tetramethyl-4,4'-diaminodiphenylmethane.

Examples of the guanamines include benzoguanamine and acetoguanamine.

Examples of the imidazoles include 2-methylimidazole, 2-ethyl-4-methylimidazole, 2-isopropylimidazole, 2-undecylimidazole, 2-heptadecylimidazole, 2-phenylimidazole, 2-phenyl-4-methylimidazole, and 2-aminopropylimidazole.

Examples of the dihydrazides include oxalic dihydrazide, malonic dihydrazide, succinic dihydrazide, glutaric aciddihydrazide, adipic dihydrazide, suberic aciddihydrazide, azelaic aciddihydrazide, sebacic aciddihydrazide, and phthalic dihydrazide.

Examples of the amine compound including one or more active hydrogens, which can be used to constitute the amine-based latent curing agent, include, in addition to the above-listed compounds, N,N-dimethylaminoethylamine, N,N-diethylaminoethylamine, N,N-diisopropylaminoethylamine, N,N-diallylaminoethylamine, N,N-benzylmethylaminoethylamine, N,N-dibenzylaminoethylamine, N,N-cyclohexylmethylaminoethylamine, N,N-dicyclohexylaminoethylamine, N-(2-aminoethyl)pyrrolidine, N-(2-aminoethyl)piperidine, N-(2-aminoethyl)morpholine, N-(2-aminoethyl)piperazine, N-(2-aminoethyl)-N'-methylpiperazine, N,N-dimethylaminopropylamine, N,N-diethylaminopropylamine, N,N-diisopropylaminopropylamine, N,N-diallylaminopropylamine, N,N-benzylmethylaminopropylamine, N,N-dibenzylaminopropylamine, N,N-cyclohexylmethylaminopropylamine, N,N-dicyclohexylaminopropylamine, N-(3-aminopropyl)pyrrolidine, N-(3-aminopropyl)piperidine, N-(3-aminopropyl)morpholine, N-(3-aminopropyl)piperazine, N-(3-aminopropyl)-N'-methylpiperidine, 4-(N,N-dimethylamino)benzylamine, 4-(N,N-diethylamino)benzylamine, 4-(N,N-diisopropylamino)benzylamine, N,N,-dimethylisophoronediamine, N,N-dimethylbisaminocyclohexane, N,N,N'-trimethylethylenediamine, N'-ethyl-N,N-dimethylethylenediamine, N,N,N'-trimethylethylenediamine, N'-ethyl-N,N-dimethylpropanediamine, N'-ethyl-N,N-dibenzylaminopropylamine, N,N-(bisaminopropyl)-N-methylamine, N,N-bisaminopropylethylamine, N,N-bisaminopropylpropylamine, N,N-bisaminopropylbutylamine, N,N-bisaminopropylpentylamine, N,N-bisaminopropylhexylamine, N,N-bisaminopropyl-2-ethylhexylamine, N,N-bisaminopropylcyclohexylamine, N,N-bisaminopropylbenzylamine, N,N-bisaminopropylallylamine, bis[3-(N,N-dimethylaminopropyl)]amine, bis[3-(N,N-diethylaminopropyl)]amine, bis[3-(N,N-diisopropylaminopropyl)]amine, and bis[3-(N,N-dibutylaminopropyl)]amine.

The epoxy compound, which can be used to constitute the amine-based latent curing agent, is not particularly limited, and may be appropriately selected according to the intended purpose. Examples of the epoxy compound include polyglycidyl ether compounds of mononuclear polyvalent phenols, polyglycidyl ether compounds of polynuclear polyvalent phenols, polyglycidyl ethers of polyvalent alcohols, glycidyl ester compounds of aliphatic, aromatic, or alicyclic polybasic acids, homopolymers or copolymers of glycidyl methacrylate, glycidylamino group-containing epoxy compounds, epoxy compounds of cyclic olefin compounds, epoxidized conjugated diene polymers, and heterocyclic compounds.

Examples of the polyglycidyl ether compounds of mononuclear polyvalent phenols include hydroquinone, resorcinol, pyrocatechol, and phloroglucinol.

Examples of the polyglycidyl ether compounds of polynuclear polyvalent phenols include dihydroxynephthalene, biphenol, methylene bisphenol (bisphenol F), methylene bis(orthocresol), ethylidene bisphenol, isopropylidene bisphenol (bisphenol A), isopropylidene bis(orthocresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane, thiobisphenol, sulfonylbisphenol, oxybisphenol, phenolnovolac, orthocresolnovolac, ethylphenolnovolac, butylphenolnovolac, octylphenolnovolac, resorcinolnovolac, and terpenephenol.

Examples of the polyvalent alcohol in the polyglycidyl ethers of the polyvalent alcohols include ethylene glycol, propylene glycol, butylene glycol, hexanediol, polyglycol, thiodiglycol, glycerin, trimethylolpropane, pentaerythritol, sorbitol, and bisphenol A-alkylene oxide adducts.

Examples of the polybasic acid in the glycidyl ester compounds of the aliphatic, aromatic, or alicyclic polybasic acids include maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid, and endomethylene tetrahydrophthalic acid.

Examples of the glycidylamino group-containing epoxy compounds include N,N-diglycidylaniline, bis(4-(N-methyl-N-glycidylamino)phenyl)methane, and diglycidyl-o-toluidine.

Examples of the epoxy compounds of the cyclic olefin compounds include vinylcyclohexene diepoxide, dicyclopentadiene diepoxide, 3,4-epoxycyclohexylmethyl-3,4-epoxycyclohexane carboxylate, 3,4-epoxy-6-methylcyclohexylmethyl-6-methylcyclohexane carboxylate, and bis(3,4-epoxy-6-methylcyclohexylmethyl)adipate.

Examples of the epoxidized conjugated diene polymers include epoxidized polybutadiene and epoxidized styrene-butadiene copolymers.

Examples of the heterocyclic compound include triglycidyl isocyanurate.

The polyisocyanate compound, which can be used to constitute the amine-based latent curing agent, is not particularly limited, and may be appropriately selected according to the intended purpose. Examples of the polyisocyanate compound include aromatic diisocyanate, alicyclic diisocyanate, and aliphatic diisocyanate.

Examples of the aromatic diisocyanate include 2,4-tolylene diisocyanate, 2,6-tolylene diisocyanate, diphenylmethane-4,4'-diisocyanate, phenylene diisocyanate, xylylene diisocyanate, tetramethylxylylene diisocyanate, 1,5-naphthylene diisocyanate, 1,5-tetrahydronaphthalenediisocyanate, 3,3'-dimethyldiphenyl-4,4'-diisocyanate, dianisidine diisocyanate, and tetramethylxylylene diisocyanate.

Examples of the alicyclic diisocyanate include isophorone diisocyanate, dicyclohexylmethane-4,4'-diisocyanate, trans-1,4-cyclohexyldiisocyanate, and norbornenediisocyanate.

Examples of the aliphatic diisocyanate include tetramethylene diisocyanate, 1,6-hexamethylene diisocyanate, 2,2,4-trimethylhexamethylene diisocyanate, (2,4,4)-trimethylhexamethylene diisocyanate, and lysine diisocyanate.

Examples of the polyisocyanate compound, which can be used to constitute the amine-based latent curing agent, include, in addition to the above-listed compounds, isocyanurate trimers of the above-listed diisocyanates, biuret trimers of the above-listed diisocyanates, trimethylolpropane adducts of the above-listed diisocyanates, triphenylmethane triisocyanate, 1-methylbenzol-2,4,6-triisocyanate, and dimethyltriphenylmethane tetraisocyanate.

The above-listed isocyanurate compounds may be modified with carbodiimide, isocyanurate, or biuret. The

above-listed isocyanurate compounds may be block isocyanates blocked with various blocking agents.

The phenolic resin, which can be used to constitute the amine-based latent curing agent, is not particularly limited, and may be appropriately selected according to the intended purpose. Examples of the phenolic resin include polyvalent phenol compounds, such as phenolic novolac resins, cresol novolac resins, aromatic hydrocarbon formaldehyde resin-modified phenolic resins, dicyclopentadiene phenol adduct resins, phenol aralkyl resins (Zyloc resins), naphthol aralkyl resins, trisphenylol methane resins, tetraphenylol ethane resins, naphthol novolac resins, naphthol-phenol co-condensation novolac resins, naphthol-cresol co-condensation novolac resins, biphenyl-modified phenolic resins (polyvalent phenol compounds in which phenol nuclei are linked with a bismethylene group), biphenyl-modified naphthol resins (polyvalent naphthol compounds in which phenol nuclei are linked with a bismethylene group), aminotriadine-modified phenolic resins (compounds each including a phenol skeleton, a triadine ring, and a primary amino group in a molecular structure of the compound), and alkoxy group-containing aromatic ring-modified novolac resins (polyvalent phenol compounds in which a phenol nucleus and an alkoxy group-containing aromatic ring are linked with formaldehyde).

The above-listed curing catalysts may be used alone or in combination.

An amount of the curing catalyst in the resin composition is preferably 0.1% by mass or greater and 10% by mass or less, more preferably 0.2% by mass or greater and 5.0% by mass or less, and yet more preferably 0.5% by mass or greater and 3.0% by mass or less, relative to a total amount of the resin components (the (A) to (C) components).

The resin composition of the present disclosure may include, in addition to the curing catalyst, other components, such as aminosilane compounds, mercaptosilane compounds, silane coupling agents, reactive or non-reactive diluents (plasticizers), fillers or pigments, lubricants, thickeners, thixotropic agent, antioxidants, light stabilizers, UV absorbers, flame retardants, defoamers, corrosion inhibitors, additives, and adhesive resins.

Examples of the aminosilane compounds include 3-aminopropyltrimethoxysilane, 3-aminopropyltriethoxysilane, N-(2-aminoethyl)-3-aminopropyltrimethoxysilane, N-(2-aminoethyl)-3-aminopropylmethyldimethoxysilane, N-(2-aminoethyl)-3-aminopropyltriethoxysilane, N-(2-aminoethyl)-3-aminopropylmethyldiethoxysilane, N-(2-aminoethyl)-8-aminooctyltrimethoxysilane, N-phenyl-3-aminopropyltrimethoxysilane, and 3-triethoxysilyl-N-(1,3-dimethylbutylidene) propylamine.

Examples of the mercaptosilane compounds include 3-mercaptopropyltrimethoxysilane.

Examples of the silane coupling agents include epoxysilane compounds, such as 2-(3,4-epoxycyclohexyl) ethyltrimethoxysilane, 3-glycidoxypropylmethyldimethoxysilane, 3-glycidoxypropyltrimethoxysilane, 3-glycidoxypropylmethyldiethoxysilane, and 3-glycidoxypropyltriethoxysilane.

Examples of the reactive or non-reactive diluents (plasticizers) include monoglycidyl ethers, dioctyl phthalate, dibutyl phthalate, benzyl alcohol, and coal tar.

Examples of the fillers or pigments include glass fibers, carbon fibers, cellulose, silica sand, cement, kaolin, clay, aluminum hydroxide, bentonite, talc, silica, silica powder, titanium dioxide, carbon black, graphite, iron oxide, and bitumen.

Examples of the lubricants include candelilla wax, carnauba wax, Japan wax, Chinese wax, beeswax, lanolin, spermaceti, montan wax, petroleum wax, fatty acid wax, fatty acid esters, fatty acid ethers, aromatic esters, and aromatic ethers.

As the additives, any additives available in the related art may be used. Examples of the additives include colloidal silica and colloidal alumina.

Examples of the adhesive resins include xylene resins and petroleum resins.

The resin composition can be produced by mixing the (A) component, the (B) component, the (C) component, the (D) component, and optional other components according to any method typically used in the related art.

Use of the resin composition of the present disclosure is not particularly limited, and the resin composition can be used in various applications. For example, the resin composition can be used in a wide range of applications, such as coating materials (paints), adhesives, glues, coating agents, sizing agents, building materials, and electronic components. The resin composition can be particularly suitably applied in electronic devices, such as use as laminates for electronic circuit boards, use as sealants or adhesives for electronic components, and use as adhesives for electrical devices, such as copiers and printers.

An average thickness of the resin layer is not particularly limited, and may be appropriately selected according to the intended purpose. The average thickness is preferably 0.5 μm or greater and 3.0 μm or less, and more preferably 0.8 μm or greater and 1.5 μm or less. The average thickness of the resin layer in the range of 0.5 μm or greater is preferred because desired peel strength is achieved before and after use of the fluid ejection head. The average thickness of the resin layer in the range of 3.0 μm or less is preferred because desired peel strength is achieved before and after use of the fluid ejection head.

The average thickness of the resin layer may be measured by embedding a sample piece to which the resin layer is adhered in an epoxy resin, and processing a cut surface of a sample using a polisher so that a desired cross-section of the resin layer can be observed. For example, an electron microscope (scanning electron microscope (SEM)) is used for the observation of the sample.

Whether or not the resin layer includes the (A) component, the (B) component, and the (C) component can be

determined, for example, by determining a main skeleton of a sample of the resin layer through pyrolysis gas chromatography/mass spectrometry (Py-GC/MS) and gas chromatography/time-of-flight mass spectrometry (GC/TOFMS), and further considering the information of the molecular structure and functional groups through Fourier transform infrared spectroscopy (FTIR) and magnetic resonance spectroscopy (NMR).

Condition for analyzing the resin layer by Py-GC/MS will be described below. According to the method using Py-GC/MS, a small amount of a sample is directly exposed to high heat to immediately thermally decompose the sample, and a gas component generated during the decomposition is fed to and analyzed by GC/MS. Note that, the following is an example of the analysis conditions, but the analysis conditions are not limited to the analysis conditions described below. The analysis conditions can be appropriately changed at any time according to a composition or state of an analysis sample, and an analysis can be performed while optimizing analysis conditions.

-Configuration of device and measuring conditions-

GC/MS: QP-5000 available from Shimadzu Corporation
Pyrolyzer: Py-2020D available from Frontier Laboratories Ltd.
Evaluation conditions:

Heating temperature: 300°C
Column: UA5 (length: 30 m, internal diameter: 0.25 mm, film thickness: 0.25 μm)
Heating of column: from 50°C to 350°C (heating rate of 20 °C/min)
Ionization method: electron ionization (EI) (70 eV)
Split: 1:100

The GC/MS mainly performs an analysis by searching through a library to estimate a structure, thus it is difficult to analyze a material that is not registered in the database to be searched. Therefore, the GC-TOFMS may be performed to analyze a structure of a component that cannot be analyzed by the GC-MS. According to the GC-TOFMS, accurate mass information of a molecule or a fragment can be acquired.

Moreover, an accurate mass measurement according to chemical ionization (CI) may be also performed in advance. The chemical ionization (CI) enables to easily observe molecule ions.

-Configuration of device and measuring conditions-

GC/TOFMS: Waters GCT Premier
Column: DB5-MS (30 m × 0.25 mm, 0.25 μm)
Heating conditions: heating at 50°C (1 min), heating at the rate of 10 °C/min, followed by heating at 320°C (10 min)
Carrier gas: He, 1.0 mL/min (constant flow rate)
Injection system: split 50:1
Injection port: 280°C
"CI ionization conditions"
Ionization method: positive chemical ionization (PCI) (methane, isobutane, no gas)
Electron energy: 40 eV
Ionization current: 200 μA

In addition to the information described above, information of functional groups or elemental ratios obtained by FT-IR using ART, Raman spectroscopy, $^{13}C$, $^{1}H$, $^{14}N$, $^{33}S$-NMR analysis, etc., which are typically used in chemical analyses, are also considered to determine whether the resin layer includes the (A) component, the (B) component, and the (C) component. Based on the analysis result, whether the resin layer includes a cured product of the resin composition including the (A) component, the (B) component, and the (C) component can be determined.

<First member>

The first member is not particularly limited, and may be appropriately selected according to the intended purpose. The first member is preferably a nozzle plate in which nozzle openings (may be also referred to as "nozzles") for ejecting a fluid are formed.

The nozzle plate may include a nozzle plate and a water repellent film on the nozzle plate.

A shape, size, and structure of the nozzle plate are not particularly limited, and may be appropriately selected according to the intended purpose.

A material of the nozzle plate is not particularly limited, and may be appropriately selected according to the intended purpose. Examples of the material of the nozzle plate include stainless steel, Al, Bi, Cr, InSn, ITO, Nb, $Nb_2O_5$, Ni, NiCr, NiPd, PtW, Si, $SiO_2$, Sn, $Ta_2O_5$, Ti, W, ZAO ($ZnO+Al_2O_3$), and Zn. Among the above-listed examples, stainless steel is preferred in view of anti-corrosion properties.

The above-listed examples may be used alone or in combination.

The number, alignment, gap, shapes, sizes, and cross-sectional shapes of the nozzle openings are not particularly limited, and may be appropriately selected according to the intended purpose.

<Second member>

The second member is not particularly limited, and may be appropriately selected according to the intended purpose. For example, the second member is preferably a flow channel plate that forms a flow channel communicating with the nozzle openings.

The first member and the second member are bonded together with the resin layer being interposed between the first member and the second member so that an individual fluid chamber is formed. Specifically, in the embodiment of the present disclosure, the resin layer is interposed between the first member and the second member.

A process layer may be formed on a surface of the first member or the second member, or surfaces of the first member and the second member in contact with the resin layer. A material of the process layer includes Si-containing oxide. The Si-containing oxide preferably includes a transition metal capable of forming a passivation film against the first member or the second member.

The process layer preferably includes at least one transition metal selected from the Group 4 elements and the Group 5 elements, and more preferably includes at least one selected from the group consisting of Hf, Ta, and Zr. When at least one selected from the group consisting of Hf, Ta, and Zr is introduced into a $SiO_2$ film, at least one transition metal, which has been introduced, is strongly bonded to O to form a passivation film. As well as improving an packing factor of a film, formation of the passivation film can effectively inhibit a corrosion reaction when the film is in contact with both acidic and alkaline fluids. Therefore, an oxide film resistant to acid or alkaline fluids can be suitably formed.

An amount of Si in the process layer is not particularly limited, and may be appropriately selected according to the intended purpose. The amount of Si is preferably 17 at% or greater, and more preferably 20 at% or greater. The amount of Si in the range of 17 at% or greater in the process layer is preferred because a completely transparent film can be formed.

An amount of the at least one transition metal in the process layer is not particularly limited, and may be appropriately selected according to the intended purpose. The amount of the at least one transition metal is preferably 2 at% or greater, and more preferably 3.5 at% or greater and 13.5 at% or less. The amount of the at least one transition metal in the range of 2 at% or greater in the process layer is preferred because a density of the process layer is increased, and resistance to fluids is improved. Moreover, the above-mentioned range is preferred because a resultant process layer has a structure having a small number of defects and a high packing factor, thereby effectively achieving ink resistance.

The amounts of Si and at least one transition metal in the process layer can be measured, for example, by XPS.

An average thickness of the process layer is not particularly limited, and may be appropriately selected according to the intended purpose. The average thickness of the process layer is preferably 10 nm or greater, and more preferably 25 nm or greater. The average thickness of the process layer in the range of 10 nm or greater is preferred because the process layer can sufficiently cover defects, which may be formed in the first member or the second member.

The average thickness of the process layer is not particularly limited, and may be appropriately selected according to the intended purpose. The average thickness of the process layer is preferably 200 nm or less, and more preferably 50 nm or less. The average thickness of the process layer in the range of 200 nm or less is preferred because the process layer does not adversely affect operations of a pressure generator.

The average thickness of the process layer can be measured, for example, by a white light interferometer.

A surface treatment may be performed on the first member and the second member for enhancing adhesion strength. In a case where the first member and the second member are metal members, it is effective to use a silane coupling agent, a titanate-based coupling agent, or an aluminate-based coupling agent to facilitate bonding of the metal of the first member or the second member and the resin layer formed of the resin composition via covalent bonds. A surface of the metal member to be adhered may be directly processed with the coupling agent. Alternatively, a surface treatment for enhancing bonding of the coupling agent may be performed first, followed by performing the coupling treatment.

As the silane coupling agent, the silane coupling agents listed in the section of <<Other components>> may be used, or other silane coupling agents may be used. Examples of the silane coupling agent used for the surface treatment performed on the first member and the second member include 3-aminopropyltrimethoxysilane, 3-aminopropyltriethoxysilane, N-(2-aminoethyl)aminopropyltrimethoxysilane, N-(2-aminoethyl)aminopropylmethyldimethoxysilane, 3-phenylaminopropyltrimethoxysilane, 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilane, N-(2-aminoethyl)-3-aminopropylmethyldimethoxysilane, N-(2-aminoethyl)-3-aminopropylmethyldiethoxysilane, N-(2-aminoethyl)-3-aminopropyltrimethoxysilane, N-(2-aminoethyl)-3-aminopropyltriethoxysilane, 3-aminopropyltrimethoxysilane, 3-aminopropyltriethoxysilane, (1,3-dimethyl-butylidene)-propylamine, N-phenyl-3-aminopropyltrimethoxysilane, N,N-bis(3-(trimethoxysilyl)propyl)ethylenediamine, N-(1,3-dimethylbutylidene)-3-(triethoxysilyl)-1-propaneamine, 3-phenylaminopropyltrimethoxysilane, aminoethyl-3-aminopropyltrimethoxysilane hydrochlorides, N-(2-(vinylbenzylamino)ethyl)-3-aminopropyltrimethoxysilane hydrochlorides, 1,2-ethanediamine, [N-{3-(trimethoxysilyl)propyl}-N-{(etenylphenyl)methyl} derives., hydrochlorides], 3-chloropropyltrimethoxysilane, 3-mercaptopropylmethyldimethoxysilane, 3-mercaptopropyltrimethoxysilane, 3-mercaptopropylethoxysilane, bis(triethoxysilylpropyl)tetrasulfide, and 3-isocyanatopropyltriethoxysilane.

Organic groups in the silane coupling agent preferably include groups including functional groups that react with an epoxy resin. The above-listed coupling agents are examples of such silane coupling agents. The above-listed silane coupling agents can be acquired from Shin-Etsu Chemical Co., Ltd., Dow Corning Tray Co., Ltd., CHISSO CORPORATION, etc.

Examples of the titanate-based coupling agent and the aluminate-based coupling agent include titanium tetra-i-propoxide, titanium tetra-n-butoxide, titanium tetrakis(2-ethylhexyloxide), titanium-i-propoxyoctylene glycolate, di-i-propoxy·bis(acetylacetonato)titanium, poly(di-i-propoxy·oxytitanium), poly(di-n-butoxy·oxytitanium), di-n-butoxy·bis(triethanolaluminato)titanium, diisopropoxy·bis(triethanolaluminato)titanium, isopropyltri(N-amioethyl·aminoethyl)titanate, and acetoalkoxyaluminium diisopropylate.

Each of the titanate-based coupling agent and the aluminate-based coupling agent forms an organic polymer film on an inorganic surface to improve wettability of the resin layer, thereby enhancing adhesion strength. The above-listed titanate-based coupling agents and aluminate-based coupling agents are merely listed as examples, and the titanate-based coupling agent and the aluminate-based coupling agent are not limited to the above-listed agents. The titanate-based coupling agent and the aluminate-based coupling agent can be acquired from MITSUBISHI GAS CHEMICAL COMPANY, INC., Nippon Soda Co., Ltd., and Ajinomoto Fine-Techno Co., Inc.

The coupling agent is preferably a coupling agent including an epoxy group or an amine group. In order to add the coupling agent to the resin composition to achieve a desired effect, the coupling agent is more preferably a coupling agent including an epoxy group in view of a long shelf life of a resultant resin composition and inhibition of a reaction at room temperature.

As the surface treatment performed before the coupling treatment, formation of a silicon-containing oxide film, such as $SiO_2$, SiOC, SiTaOx, SiZrOx, namely, formation of the process layer is very effective when the silane coupling agent is used for the coupling treatment. As a method for forming the process layer, a method that can easily form a thin film, such as vapor deposition, sputtering, chemical vapor deposition, and atomic layer deposition, is effective. Processing with $TiO_2$ or TiN is also effective for the silane coupling agent, as well for the titanate-based coupling agent.

<Other members>

Examples of the above other members include a stimulus generator.

The stimulus generator is a member configured to generate a stimulus to be applied to a fluid (ink).

The stimulus generated by the stimulus generator is not particularly limited, and may be appropriately selected according to the intended purpose. Examples of the stimulus include heat (temperature), pressure, vibrations, and light. Among the above-listed examples, heat and pressure are preferred.

The above-listed examples may be used alone or in combination.

Examples of the stimulus generator include heating devices, pressurizing devices, piezoelectric elements, vibration generators, ultrasonic oscillators, and lights. Specific examples of the stimulus generator include: piezoelectric actuators, such as piezoelectric elements; thermal actuators that utilize a phase change due to film boiling of a fluid using a thermoelectric conversion element, such as a heat element; shape memory alloy (SMA) actuators that utilize a metal phase change due to a temperature change; and electrostatic actuators that utilizes electrostatic force.

In a case where the stimulus is "heat," for example, thermal energy corresponding to a recording signal is applied to a fluid (ink) in the fluid ejection head by a thermal head. Air bubbles are formed in the ink by the applied thermal energy, and the pressure of the air bubbles causes the ink to be discharged from nozzle openings of the nozzle plate as droplets.

In a case where the stimulus is "pressure," voltage is applied to the piezoelectric element adhered to a position inside an ink flow channel of the fluid ejection head, called the pressure chamber, and the applied voltage causes the piezoelectric element to be deformed. The deformation of the piezoelectric element causes a volume of the pressure chamber to decrease, thereby ejecting the fluid (ink) as droplets from the nozzle openings of the fluid ejection head.

Among the above-described examples, a piezoelectric system where voltage is applied to a piezoelectric element to jet a fluid (ink) is preferred.

<Fluid>

The fluid is not particularly limited, as long as the fluid can be ejected from the fluid ejection head as described above, and may be appropriately selected according to the intended purpose. Examples of the fluid include inks (e.g., inkjet inks and photopolymerizable inks), pre-treatment fluids, fixing solutions, resist materials, pattern forming materials, and adhesives. Among the above-listed examples, an ink is preferred.

<<Ink>>

The ink may include a colorant, an organic solvent, and a resin, and may further include other components as necessary.

<<<Colorant>>>

The colorant is not particularly limited. A pigment or a dye may be used as the colorant.

As the pigment, an inorganic pigment or an organic pigment may be used. As the pigment, a single pigment may be used or two or more pigments may be used in combination. Moreover, mixed crystals may be used as the pigment.

As the pigment, for example, a black pigment, a yellow pigment, a magenta pigment, a cyan pigment, a white pigment, a green pigment, an orange pigment, a gloss pigment of gold or silver, or a metallic pigment may be used.

As the inorganic pigment, titanium oxide, iron oxide, calcium carbonate, barium sulfate, aluminum hydroxide, barium yellow, cadmium red, chrome yellow, or carbon black produced by any method available in the related art (e.g., a contact method, a furnace method, and a thermal method) may be used.

As the organic pigment, an azo pigment, a polycyclic pigment (e.g., a phthalocyanine pigment, a perylene pigment, a perinone pigment, an anthraquinone pigment, a quinacridone pigment, a dioxazine pigment, an indigo pigment, a thioindigo pigment, an isoindolinone pigment, and a quinophthalone pigment), a dye chelate (e.g., a basic dye chelate and an acid dye chelate), a nitro pigment, a nitroso pigment, or aniline black may be used. Among the above-listed pigments, a pigment having high affinity to a solvent is preferably used. Moreover, hollow resin particles or hollow inorganic particles may be also used as the pigment.

Specific examples of the black pigment include: carbon black (C.I. Pigment Black 7), such as furnace black, lamp black, acetylene black, and channel black; metals, such as copper, iron (C.I. Pigment Black 11), and titanium oxide; and organic pigments, such as aniline black (C.I. Pigment Black 1).

Specific examples of the color pigment include C.I. Pigment Yellow 1, C.I. Pigment Yellow 3, C.I. Pigment Yellow 12, C.I. Pigment Yellow 13, C.I. Pigment Yellow 14, C.I. Pigment Yellow 17, C.I. Pigment Yellow 24, C.I. Pigment Yellow 34, C.I. Pigment Yellow 35, C.I. Pigment Yellow 37, C.I. Pigment Yellow 42 (yellow iron oxide), C.I. Pigment Yellow 53, C.I. Pigment Yellow 55, C.I. Pigment Yellow 74, C.I. Pigment Yellow 81, C.I. Pigment Yellow 83, C.I. Pigment Yellow 95, C.I. Pigment Yellow 97, C.I. Pigment Yellow 98, C.I. Pigment Yellow 100, C.I. Pigment Yellow 101, C.I. Pigment Yellow 104, C.I. Pigment Yellow 108, C.I. Pigment Yellow 109, C.I. Pigment Yellow 110, C.I. Pigment Yellow 117, C.I. Pigment Yellow 120, C.I. Pigment Yellow 138, C.I. Pigment Yellow 150, C.I. Pigment Yellow 153, C.I. Pigment Yellow 155, C.I. Pigment Yellow 180, C.I. Pigment Yellow 185, C.I. Pigment Yellow 213, C.I. Pigment Orange 5, C.I. Pigment Orange 13, C.I. Pigment Orange 16, C.I. Pigment Orange 17, C.I. Pigment Orange 36, C.I. Pigment Orange 43, C.I. Pigment Orange 51, C.I. Pigment Red 1, C.I. Pigment Red 2, C.I. Pigment Red 3, C.I. Pigment Red 5, C.I. Pigment Red 17, C.I. Pigment Red 22, C.I. Pigment Red 23, C.I. Pigment Red 31, C.I. Pigment Red 38, C.I. Pigment Red 48:2 (Permanent Red 2B(Ca)), C.I. Pigment Red 48:3, C.I. Pigment Red 48:4, C.I. Pigment Red 49:1, C.I. Pigment Red 52:2, C.I. Pigment Red 53:1, C.I. Pigment Red 57:1 (Brilliant Carmine 6B), C.I. Pigment Red 60:1, C.I. Pigment Red 63:1, C.I. Pigment Red 63:2, C.I. Pigment Red 64:1, C.I. Pigment Red 81, C.I. Pigment Red 83, C.I. Pigment Red 88, C.I. Pigment Red 101 (red iron oxide), C.I. Pigment Red 104, C.I. Pigment Red 105, C.I. Pigment Red 106, C.I. Pigment Red 108 (cadmium red), C.I. Pigment Red 112, C.I. Pigment Red 114, C.I. Pigment Red 122 (quinacridone magenta), C.I. Pigment Red 123, C.I. Pigment Red 146, C.I. Pigment Red 149, C.I. Pigment Red 166, C.I. Pigment Red 168, C.I. Pigment Red 170, C.I. Pigment Red 172, C.I. Pigment Red 177, C.I. Pigment Red 178, C.I. Pigment Red 179, C.I. Pigment Red 184, C.I. Pigment Red 185, C.I. Pigment Red 190, C.I. Pigment Red 193, C.I. Pigment Red 202, C.I. Pigment Red 207, C.I. Pigment Red 208, C.I. Pigment Red 209, C.I. Pigment Red 213, C.I. Pigment Red 219, C.I. Pigment Red 224, C.I. Pigment Red 254, C.I. Pigment Red 264, C.I. Pigment Violet 1 (rhodamine lake), C.I. Pigment Violet 3, C.I. Pigment Violet 5:1, C.I. Pigment Violet 16, C.I. Pigment Violet 19, C.I. Pigment Violet 23, C.I. Pigment Violet 38, C.I. Pigment Blue 1, C.I. Pigment Blue 2, C.I. Pigment Blue 15 (phthalocyanine blue), C.I. Pigment Blue 15:1, C.I. Pigment Blue 15:2, C.I. Pigment Blue 15:3, C.I. Pigment Blue 15:4 (phthalocyanine blue), C.I. Pigment Blue 16, C.I. Pigment Blue 17:1, C.I. Pigment Blue 56, C.I. Pigment Blue 60, C.I. Pigment Blue 63, C.I. Pigment Green 1, C.I. Pigment Green 4, C.I. Pigment Green 7, C.I. Pigment Green 8, C.I. Pigment Green 10, C.I. Pigment Green 17, C.I. Pigment Green 18, and C.I. Pigment Green 36.

The dye is not particularly limited. An acid dye, a direct dye, a reactive dye, or a basic dye may be used as the dye.

As the dye, a single dye may be used, or two or more dyes may be used in combination.

Examples of the dye include C.I. Acid Yellow 17, C.I. Acid Yellow 23, C.I. Acid Yellow 42, C.I. Acid Yellow 44, C.I. Acid Yellow 79, C.I. Acid Yellow 142, C.I. Acid Red 52, C.I. Acid Red 80, C.I. Acid Red 82, C.I. Acid Red 249, C.I. Acid Red 254, C.I. Acid Red 289, C.I. Acid Blue 9, C.I. Acid Blue 45, C.I. Acid Blue 249, C.I. Acid Black 1, C.I. Acid Black 2, C.I. Acid Black 24, C.I. Acid Black 94, C.I. Food Black 1, C.I. Food Black 2, C.I. Direct Yellow 1, C.I. Direct Yellow 12, C.I. Direct Yellow 24, C.I. Direct Yellow 33, C.I. Direct Yellow 50, C.I. Direct Yellow 55, C.I. Direct Yellow 58, C.I. Direct Yellow 86, C.I. Direct Yellow 132, C.I. Direct Yellow 142, C.I. Direct Yellow 144, C.I. Direct Yellow 173, C.I. Direct Red 1, C.I. Direct Red 4, C.I. Direct Red 9, C.I. Direct Red 80, C.I. Direct Red 81, C.I. Direct Red 225, C.I. Direct Red 227, C.I. Direct Blue 1, C.I. Direct Blue 2, C.I. Direct Blue 15, C.I. Direct Blue 71, C.I. Direct Blue 86, C.I. Direct Blue 87, C.I. Direct Blue 98, C.I. Direct Blue 165, C.I. Direct Blue 199, C.I. Direct Blue 202, C.I. Direct Black 19, C.I. Direct Black 38, C.I. Direct Black 51, C.I. Direct Black 71, C.I. Direct Black 154, C.I. Direct Black 168, C.I. Direct Black 171, C.I. Direct Black 195, C.I. Reactive Red 14, C.I. Reactive Red 32, C.I. Reactive Red 55, C.I. Reactive Red 79, C.I. Reactive Red 249, C.I. Reactive Black 3, C.I. Reactive Black 4, and C.I. Reactive Black 35.

An amount of the colorant in the ink is preferably 0.1% by mass or greater and 15% by mass or less, and more preferably 1% by mass or greater and 10% by mass or less relative to a total amount of the ink, in view of desired ejection stability.

Examples of a method of dispersing the pigment in the ink to produce the ink include: a method where a hydrophilic functional group is introduced to the pigment to form a self-dispersible pigment; a method where surfaces of particles of the pigment are each coated with a resin to disperse the pigment; and a method where a dispersing agent is used to disperse the pigment.

As the method where a hydrophilic functional group is introduced to the pigment to form a self-dispersible pigment, for example, a self-dispersible pigment, which is prepared by adding a functional group (e.g., a sulfone group and a carboxyl group) to the pigment (e.g., carbon) to be dispersible in water, may be used.

As the method where surfaces of particles of the pigment are each coated with a resin, a pigment prepared by encapsulating the pigment in microcapsules to be dispersible in water may be used. The encapsulated pigment may be referred to as a resin-coated pigment. When the resin-coated pigment is used, all of the pigment particles in an ink may not be coated with a resin. The pigment particles that are not coated with the resin, or the pigment particles partially coated with the resin may be dispersed in the ink, as long as the effects obtainable by the present disclosure are not adversely affected. Among the above-listed examples, the resin-coated pigment is preferred in view of fixability, storage stability, and ejection reliability of the ink.

Examples of the method where a dispersing agent is used to disperse the pigment include a method where a low molecular weight dispersant or high molecular weight dispersant available in the related art, such as a surfactant, is used to disperse the pigment. As the dispersing agent, for example, an anionic surfactant, a cationic surfactant, an amphoteric surfactant, or a nonionic surfactant may be used according to the pigment to be used. RT-100 (nonionic surfactant) available from TAKEMOTO OIL & FAT CO., LTD. or a sodium naphthalene sulfonate formaldehyde condensate may be also suitably used as the dispersing agent. The above-listed dispersing agents may be used alone or in combination.

The ink may be prepared by mixing the pigment with other materials, such as water and an organic solvent. The ink can be also prepared by mixing the pigment with other materials, such as water and a dispersing agent, to prepare a pigment dispersion, and mixing the prepared pigment dispersion with other materials, such as water and an organic solvent.

The pigment dispersion can be prepared by mixing water, the pigment, the pigment dispersing agent, and optional other components, and dispersing the resultant mixture to adjust the particle size of the pigment. The dispersing may be performed by a disperser.

The particle size of the pigment in the pigment dispersion is not particularly limited. The number-based maximum frequency particle size of the pigment based on number is preferably 20 nm or greater and 500 nm or less, and more preferably 20 nm or greater and 150 nm or less, in view of desired dispersion stability of the pigment, enhanced ejection stability of the ink, and high image density and image quality. The particle size of the pigment in the pigment dispersion can be measured by a particle size analyzer (Nanotrac Wave-UT151, available from MictotracBEL Corp.).

An amount of the pigment in the pigment dispersion is not particularly limited, and may be appropriately selected according to the intended purpose. The amount of the pigment in the pigment dispersion is preferably 0.1% by mass or greater and 50% by mass or less, and more preferably 0.1% by mass or greater and 30% by mass or less in view of desired ejection stability.

The pigment dispersion may be preferably subjected to filtration using a filter or centrifuge to remove coarse particles, followed by deaeration.

<<<Organic solvent>>>

The organic solvent used in the present disclosure is not particularly limited, and may be appropriately selected

according to the intended purpose. Examples of the organic solvent include polyvalent alcohols, ethers (e.g., alkyl ethers of polyvalent alcohols, and polyvalent alcohol aryl ethers), nitrogen-containing heterocyclic compounds, amides, amines, and sulfur-containing compounds.

Specific examples of the organic solvent include: polyvalent alcohols, such as ethylene glycol, diethylene glycol, 1,2-propanediol, 1,3-propanediol, 1,2-butanediol, 1,3-butanediol, 1,4-butanediol, 2,3-butanediol, 3-methyl-1,3-butanediol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butanetriol, 1,2,3-butanetriol, 2,2,4-trimethyl-1,3-pentanediol, and 1,3,5-pentanetriol; polyvalent alcohol alkyl ethers, such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, and propylene glycol monoethyl ether; polyvalent alcohol aryl ethers, such as ethylene glycol monophenyl ether and ethylene glycol monobenzyl ether; nitrogen-containing heterocyclic compounds, such as 2-pyrrolidone, N-methyl-2-pyrrolidone, N-hydroxyethyl-2-pyrrolidone, 1,3-dimethyl-2-imidazolinone, ε-caprolactam, and γ-butyrolactone; amides, such as formamide, N-methylformamide, N,N-dimethylformamide, 3-methoxy-N,N-dimethylpropionamide, and 3-butoxy-N,N-dimethylpropionamide; amines, such as monoethanolamine, diethanolamine, and triethylamine; sulfur-containing compounds, such as dimethyl sulfoxide, sulfolane, and thiodiethanol; propylene carbonate; and ethylene carbonate. The above-listed examples may be used alone or in combination.

A C8 or higher polyol compound and glycol ether compound are also suitably used. Specific examples of the C8 or higher polyol compound include 2-ethyl-1,3-hexanediol and 2,2,4-trimethyl-1,3-pentanediol.

Specific examples of the glycol ether compound include: polyvalent alcohol alkyl ethers, such as ethylene glycol-N-butyl ether, ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, and propylene glycol monoethyl ether; and polyvalent alcohol aryl ethers, such as ethylene glycol monophenyl ether and ethylene glycol monobenzyl ether.

An amount of the organic solvent in the ink is not particularly limited, and may be appropriately selected according to the intended purpose. In view of drying speed and ejection reliability of the ink, the amount of the organic solvent is preferably 10% by mass or greater and 60% by mass or less, and more preferably 20% by mass or greater and 60% by mass or less relative to a total amount of the ink.

<<<Resin>>>

The resin is not particularly limited, and may be appropriately selected according to the intended purpose. Examples of the resin include polyester resins, urethane resins, acrylic resins, vinyl acetate-based resins, styrene-based resins, butadiene-based resins, styrene-butadiene-based resins, vinyl chloride-based resins, styrene acrylic resins, silicone acrylic resins, and copolymers of the foregoing.

As the resin, resin particles formed of any of the above-listed resins may be used. The resin particles may be dispersed in water serving as a dispersion medium to prepare a resin emulsion. The prepared resin emulsion may be mixed with materials, such as a colorant and an organic solvent, to prepare an ink. As the resin particles, an appropriately synthesized product may be used, or a commercially available product may be used. As the resin particles, particles of a single resin may be used, or particles or two or more resins may be used in combination.

A volume average particle diameter of the resin particles is not particularly limited, and may be appropriately selected according to the intended purpose. The volume average particle diameter of the resin particles is preferably 10 nm or greater and 1,000 nm or less, more preferably 10 nm or greater and 200 nm or less, and yet more preferably 10 nm or greater and 100 nm or less in view of desired fixability and high hardness of a resultant image (a cured product of the ink).

The volume average particle diameter can be measured, for example, by a particle size analyzer (Nanotrac Wave-UT151, available from MictotracBEL Corp.).

An amount of the resin is preferably 5% by mass or greater and less than 15% by mass, and more preferably 8% by mass or greater and 12% by mass or less relative to a total amount of the ink.

A particle size of the solid matter in the ink is not particularly limited, and may be appropriately selected according to the intended purpose. The number-based maximum frequency particle size of the solid matter is preferably 20 nm or greater and 1,000 nm or less, and more preferably 20 nm or greater and 150 nm or less in view of enhanced ejection stability and high image qualities, such as image density. The solid matter includes the resin particles, particles of the pigment, etc. The particle size of the solid matter in the ink can be measured, for example, by a particle size analyzer (Nanotrac Wave-UT151, available from MictotracBEL Corp.).

<<<Other components>>>

Other components that may be included in the ink are not particularly limited, and may be appropriately selected

according to the intended purpose. Examples of the above-mentioned other components include water, surfactants, defoamers, antibacterial and antifungal agents, and corrosion inhibitors.

-Water-

An amount of the water in the ink is not particularly limited, and may be appropriately selected according to the intended purpose. In view of drying speed and ejection reliability of the ink, the amount of the water is preferably 10% by mass or greater and 90% by mass or less, and more preferably 20% by mass or greater and 60% by mass or less.

-Surfactants-

As the surfactants, any selected from silicone-based surfactants, fluorosurfactants, amphoteric surfactants, nonionic surfactants, and anionic surfactants may be used.

--Silicone-based surfactants--

The silicone-based surfactants are not particularly limited, and may be appropriately selected according to the intended purpose. Among silicone-based surfactants, the silicone-based surfactant is preferably a silicone-based surfactant that is not decomposed at high pH values (pH of 11 to 14). Examples of the silicone-based surfactant that is not decomposed at high pH values (pH of 11 to 14) include side chain-modified polydimethylsiloxane, both terminal-modified polydimethylsiloxane, one terminal-modified polydimethylsiloxane, and side chain and both terminal-modified polydimethylsiloxane. Among the above-listed examples, a silicone-based surfactant including a polyoxyethylene group and a polyoxyethylene polyoxypropylene group as modification groups is particularly preferred in view of improvement in hydrophilicity and solubility in water.

Moreover, a polyether-modified silicone-based surfactant may be used as the silicone-based surfactant. Examples of the polyether-modified silicone-based surfactant include compounds in which a polyalkylene oxide moiety is introduced into a side chain bonded to a Si site of a dimethylsiloxane moiety.

The above-listed examples may be used alone or in combination.

The polyether-modified silicone-based surfactant is not particularly limited, and may be appropriately selected according to the intended purpose. Examples of the polyether-modified silicone-based surfactant include compounds represented by General Formula (S-1) below, in which a polyalkylene oxide moiety is introduced into a side chain bonded to a Si site of a dimethylsiloxane moiety.

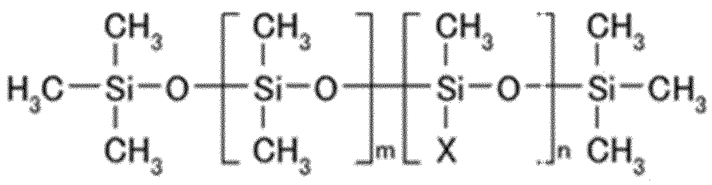

$$X = -R(C_2H_4O)_a\ (C_3H_6O)_b\ R'$$

General Formula (S-1)

(In General Formula (S-1), m, n, a, and b are each independently an integer; R is an alkylene group, and R' is an alkyl group.)

As the silicone-based surfactant, an appropriately synthesized product may be used, or a commercially available product may be used.

The commercially available product of the silicone-based surfactant can be acquired, for example, from BYK Japan K.K., Shin-Etsu Chemical Co., Ltd., Dow Corning Toray Silicone Co., Ltd., Nihon Emulsion Co., Ltd., KYOEISHA CHEMICAL Co., Ltd., etc.

Examples of the commercially available product of the polyether-modified silicone-based surfactant include: KF-618, KF-642, and KF-643 (all available from Shin-Etsu Chemical Co., Ltd.); EMALEX-SS-5602 and SS-1906EX (both available from Nihon Emulsion Co., Ltd.); DOWSIL® FZ-2105, DOWSIL® FZ-2118, DOWSIL® FZ-2154, DOWSIL® FZ-2161, DOWSIL® FZ-2162, DOWSIL® FZ-2163, and DOWSIL® FZ-2164 (all available from Dow Corning Toray Silicone Co., Ltd.); BYK-33 and BYK-387 (both available from BYK Japan K.K.); and TSF4440, TSF4452, and

TSF4453 (all available from Momentive Performance Materials Japan).

--Fluorosurfactant--

The fluorosurfactant is not particularly limited, and may be appropriately selected according to the intended purpose. The fluorosurfactant is preferably a compound in which the number of carbon atoms substituted with a fluorine atom is from 2 to 16, and more preferably a compound in which the number of carbon atoms substituted with a fluorine atom is from 4 to 16.

Examples of the fluorosurfactant include perfluoroalkyl sulfonic acid compounds, perfluoroalkyl carboxylic acid compounds, perfluoroalkyl phosphoric acid ester compounds, perfluoroalkylethylene oxide adducts, and alkylene ether polymer compounds each including a perfluoroalkyl ether group in a side chain.

Examples of the perfluoroalkyl sulfonic acid compound include perfluoroalkyl sulfonic acid and perfluoroalkyl sulfonic acid salts.

Examples of the perfluoroalkyl carboxylic acid compounds include perfluoroalkyl carboxylic acid and perfluoroalkyl carboxylic acid salts.

Examples of the alkylene ether polymer compounds each including a perfluoroalkyl ether group in a side chain include sulfuric acid ester salts of polyoxyalkylene ether polymer including an perfluoroalkyl ether group in a side chain and salts of polyoxyethylene ether polymer including a perfluoroalkyl ether group in a side chain.

The above-listed examples may be used alone or in combination.

Among the above-listed examples, a polyoxyalkylene ether polymer compound including a perfluoroalkyl ether group in a side chain is preferred, and fluorosurfactants represented by General Formulae (F-1) and (F-2) are preferred in view of low foamability.

$$\mathbf{CF_3CF_2(CF_2CF_2)_m\text{-}CH_2CH_2O(CH_2CH_2O)_n\ H} \qquad \text{General Formula (F-1)}$$

In General Formula (F-1), m is preferably an integer of from 0 to 10, and n is preferably an integer of from 0 to 40 for imparting water solubility.

$$C_nF_{2n+1}\text{-}CH_2CH(OH)CH_2\text{-}O\text{-}(CH_2CH_2O)_a\text{-}Y \qquad \text{General Formula (F-2)}$$

In General Formula (F-2), Y is H, $C_mF_{2m+1}$ (m is an integer of from 1 to 6), $CH_2CH(OH)CH_2\text{-}C_mF_{2m+1}$ (m is an integer of from 4 to 6), or $C_pH_{2p+1}$ (p is an integer of from 1 to 19); n is an integer of from 1 to 6; and a is an integer of from 4 to 14.

Examples of a counterion of the salt of the fluorosurfactant include Li, Na, K, $NH_4$, $NH_3CH_2CH_2OH$, $NH_2(CH_2CH_2OH)_2$, and $NH(CH_2CH_2OH)_3$.

As the fluorosurfactant, an appropriately synthesized product may be used, or a commercially available product may be used.

Examples of the commercially available product of the fluorosurfactant include: Surflon S-111, Surflon S-112, Surflon S-113, Surflon S-121, Surflon S-131, Surflon S-132, Surflon S-141, and Surflon S-145 (all available from AGC Inc.); FLUORAD FC-93, FLUORAD FC-95, FLUORAD FC-98, FLUORAD FC-129, FLUORAD FC-135, FLUORAD FC-170C, FLUORAD FC-430, and FLUORAD FC-431 (all available from 3M Japan Limited); MEGAFACE F-470, MEGAFACE F-1405, and MEGAFACE F-474 (all available from DIC Corporation); Zonyl TBS, Zonyl FSP, Zonyl FSA, Zonyl FSN-100, Zonyl FSN, Zonyl FSO-100, Zonyl FSO, Zonyl FS-300, Zonyl UR, CAPSTONE FS-30, CAPSTONE FS-31, CAPSTONE FS-3100, CAPSTONE FS-34, and CAPSTONE FS-35 (all available from The Chemours Company); FT-110, FT-250, FT-251, FT-400S, FT-150, and FT-400SW (all available from NEOS COMPANY LIMITED); PolyFox PF-136A, PolyFox PF-156A, PolyFox PF-151N, PolyFox PF-154, and PolyFox PF-159 (all available from OMNOVA); and UNIDYNE DSN-403N (available from DAIKIN INDUSTRIES, LTD.). Among the above-listed examples, FS-3100, FS-34, and FS-300 available from The Chemours Company, FT-110, FT-250, FT-251, FT-400S, FT-150, and FT-400SW available from NEOS COMPANY LIMITED, PolyFox PF-151N available from OMNOVA, and UNIDYNE DSN-403N available from DAIKIN INDUSTRIES, LTD. are preferred in view of desired printing qualities, specially coloring ability, and improvements in permeation of an ink into paper, wettability, and level dyeing.

--Amphoteric surfactant--

Examples of the amphoteric surfactant include laurylaminopropionic acid salts, lauryldimethylbetaine, stearyldimethylbetaine, and lauryldihydroxyethylbetaine. The above-listed examples may be used alone or in combination.

--Nonionic surfactant--

Examples of the nonionic surfactant include polyoxyethylene alkyl phenyl ethers, polyoxyethylene alkyl esters, polyoxyethylene alkyl amine, polyoxyethylene alkyl amide, polyoxyethylene propylene block polymers, sorbitan fatty acid esters, polyoxyethylene sorbitan fatty acid esters, and ethylene oxide adducts of acetylene alcohol. The above-listed examples may be used alone or in combination.

--Anionic surfactant--

Examples of the anionic surfactant include polyoxyethylene alkyl ether acetic acid salts, dodecylbenzene sulfonic acid salts, lauric acid salts, and salts of polyoxyethylene alkyl ethers. The above-listed examples may be used alone or in combination.

An amount of the surfactant in the ink is not particularly limited, and may be appropriately selected according to the intended purpose. In view of improvements in wettability, ejection stability, and image quality, the amount of the surfactant is preferably 0.001% by mass or greater and 5% by mass or less, and more preferably 0.05% by mass or greater and 5% by mass or less, relative to a total amount of the ink.

-Defoamers-

The surfactants used as the above-mentioned other components may also function as defoamers.

The defoamers are not particularly limited. Examples of the defoamers include silicone-based defoamers, polyether-based defoamers, fatty acid ester-based defoamers. The above-listed examples may be used alone or in combination. Among the above-listed examples, a silicone-based defoamer is preferred in view of a high defoaming effect.

-Antibacterial and antifungal agents-

The antibacterial and antifungal agents are not particularly limited. Examples of the antibacterial and antifungal agents include 1,2-benzisothiazolin-3-one.

-Corrosion inhibitors-

The corrosion inhibitors are not particularly limited. Examples of the corrosion inhibitors include acid sulfurous acid salts and sodium thiosulfate.

-pH regulators-

The pH regulators are not particularly limited, as long as the pH regulators can adjust a pH value to the range of 7 or higher. Examples of the pH regulators include amines, such as diethanolamine and triethanolamine.

Physical properties of the ink are not particularly limited, and may be appropriately selected according to the intended purpose. For example, a viscosity, surface tension, and pH of the ink are preferably in the following ranges.

The viscosity of the ink at 25°C is preferably 5 mPa·s or greater and 30 mPa·s or less, and more preferably 5 mPa·s or greater and 25 mPa·s or less in view of improvements in printing density and printed letter quality, and desired ejection performance. The viscosity of the ink can be measured, for example, by a rotary viscometer (RE-80L, available from Toki Sangyo Co., Ltd.). The measurement can be performed at 25°C under the conditions such that a standard cone rotor (1°34'×R24) is used, a flow rate of a sample is 1.2 mL, the number of revolutions is 50 rpm, and a duration of the measurement is 3 minutes.

The surface tension of the ink at 25°C is preferably 35 mN/m or less, and more preferably 32 mN/m or less because the ink is suitably leveled on a recording medium and a duration of drying of the ink is shortened.

The pH of the ink is preferably from 7 to 12, and more preferably from 8 to 11, in view of inhibition of corrosion of a metal member to be in contact with the ink.

(Method for producing fluid ejection head)

A method for producing a fluid ejection head according to the present disclosure includes an application step, a bonding step, and a curing step, thereby producing a fluid ejection head including a first member, a second member, a resin layer bonding the first member and the second member together, and a flow channel to which at least part of the resin layer is exposed. The application step includes applying of a resin composition to the first member, where the resin composition includes (A) an epoxy resin, (B) an episulfide resin, (C) a polythiol compound, and (D) at least one of hydrophobic titanium

oxide or hydrophobic alumina. The bonding step includes bonding of the first member and a second member together with the resin composition being interposed between the first member and the second member. The curing step includes curing of the resin composition to form the resin layer.

The "first member," "second member," "(A) epoxy resin," "(B) episulfide resin," "(C) polythiol compound," "(D) at least one of hydrophobic titanium oxide or hydrophobic alumina," "resin composition," and "resin layer" are identical to those described in the above section of (Liquid jet head), thus redundant description for the identical members and components may be omitted.

<Application step>

The application step includes applying of the resin composition to the first member. The application step can be suitably performed by an applicator.

The applicator is a member configured to apply the resin composition to the first member. The applicator is not particularly limited, and may be appropriately selected according to the intended purpose. Examples of an application method by the applicator include inkjet printing, blade coating, gravure coating, gravure offset coating, bar coating, roll coating, knife coating, air knife coating, comma coating, U-comma coating, AKKU coating, smoothing coating, microgravure coating, reverse roll coating, 4-roll coating, 5-roll coating, dip coating, curtain coating, slide coating, and die coating. Among the above-listed examples, inkjet printing is preferred. When the resin composition is applied by inkjet printing, the resin composition can be uniformly applied over an entire area of a base, and application of the resin composition can be achieved with a minimum amount of the resin composition through adjustment of a droplet size. Therefore, the inkjet printing is preferably used.

When the resin composition is applied to the first member, an average thickness of the resin composition is not particularly limited, and may be appropriately selected according to the intended purpose. In view of desirable adhesion strength, the average thickness of the resin composition is preferably 1.0 μm or greater and 2.5 μm or less.

<Bonding step>

The bonding step includes bonding of the first member and the second member together with the resin composition being interposed between the first member and the second member. The bonding step can be suitably performed by a bonding member.

The bonding member is a member configured to bond the first member and the second member together with the resin composition being interposed between the first member and the second member. The bonding member is not particularly limited, and may be appropriately selected according to the intended purpose. Examples of a bonding method performed by the bonding member include a method where the second member is placed on the first member to which an adhesive (the resin composition) has been applied.

<Curing step>

The curing step includes curing of the resin composition to form a resin layer. The curing step can be suitably performed by a curing member.

The curing member is a member configured to cure the resin composition to form a resin layer. The curing member is not particularly limited, and may be appropriately selected according to the intended purpose. Examples of the curing member include a heater, and a member configured to add a catalyst to accelerate a curing reaction.

In a case where the curing member is a heater, a curing temperature of the resin composition is preferably 60°C or higher and 120°C or lower, and a duration of curing is preferably 10 minutes or longer and 4 hours or shorter.

The heater is not particularly limited. Examples of the heater include electric ovens.

One example of the fluid ejection head of the present disclosure will be described with reference to Figs. 1 to 3.

Fig. 1 is a schematic cross-sectional view illustrating an example of the fluid ejection head of the present disclosure. Fig. 2 is a schematic enlarged cross-sectional view illustrating an example of the section A of Fig. 1. Fig. 3 is a schematic enlarged cross-sectional view illustrating another example of the section A of Fig. 1.

A fluid ejection head 100 includes a nozzle plate 102 in which nozzles 101 for ejecting droplets of a fluid are formed, a flow channel plate 104 forming a flow channel (pressure chamber) 103 communicating with the nozzle 101, and a vibration plate 105 constituting a wall surface of the pressure chamber 103. The nozzle plate 102, the flow channel plate 104, and the vibration plate 105 are laminated. The nozzle plate 102, the flow channel plate 104, and the vibration plate 105 are flow channel forming members that are bonded together with a resin layer 113 to form a flow channel.

A piezoelectric actuator including an electromechanical energy conversion element 140 is disposed on a surface of the vibration plate 105 opposite to the side where the pressure chamber 103 is present.

The electromechanical energy conversion element 140 includes an oxide electrode 141 serving as an adhesion

layer, a first electrode (lower electrode) 142, an electromechanical energy conversion film 144, and a second electrode (upper electrode) 145 sequentially laminated on the vibration plate 105 in this order.

The first electrode 142 and the second electrode 145 are not particularly limited, and may be appropriately selected according to the intended purpose. For example, the first electrode 142 and the second electrode 145 are each formed of a material having high electroconductivity, such as Pt and Au.

The electromechanical energy conversion film 144 is not particularly limited, and may be appropriately selected according to the intended purpose. For example, the electromechanical energy conversion film 144 is formed of lead zirconate titanate (PZT).

The flow channel plate 104 is not particularly limited, and may be appropriately selected according to the intended purpose. For example, the flow channel plate 104 is formed of SUS or silicon.

The nozzle plate 102 is not particularly limited, and may be appropriately selected according to the intended purpose. For example, the nozzle plate 102 is formed of SUS, nickel, or polyimide.

The nozzle plate 102 and the flow channel plate 104 are bonded together with the resin layer 113.

A process layer 112 may be formed on each of a surface of the nozzle plate 102, a surface of flow channel plate 104, bonded surfaces between the nozzle plate 102 and the resin layer 113 (the surfaces of the nozzle plate 102 and the resin layer 113 facing each other), and bonded surfaces between the flow channel plate 104 and the resin layer 113 (the surfaces of the flow channel plate 104 and the resin layer 113 facing each other). Fig. 2 illustrates an example where the process layer 112 is not formed, and Fig. 3 illustrates an example where the process layer 112 is formed.

The embodiment illustrated in Fig. 3 is obtained by forming the process layer 112 after bonding the nozzle plate 102. When the process layer 112 is formed on a surface constituting a wall surface of a flow channel formed with the flow channel forming members, the process layer 112 is preferably formed by atomic layer deposition (ALD) at a temperature of 160°C or lower, and more preferably formed by ALD at a temperature of 120°C or lower. The ALD enables precise control at a monomolecular layer level, and is a film formation technique using a surface reaction. Therefore, a very homogeneous layer can be formed on a member having a vertical wall or inclined wall, as illustrated in Fig. 1, according to the ALD.

Examples of the fluid ejection head of the present disclosure will be described with reference to Figs. 4 to 6. Fig. 4 is a schematic view illustrating an example of the fluid ejection head of the present disclosure. Fig. 5 is a schematic view illustrating another example of the fluid ejection head of the present disclosure. Fig. 6 is a schematic view illustrating yet another example of the fluid ejection head of the present disclosure. Specifically, Fig. 5 is a schematic cross-sectional view taken along a direction (a longitudinal (major) direction of the fluid chamber) perpendicular to a nozzle alignment direction. Fig. 6 is a schematic cross-sectional view taken along the nozzle alignment direction (a width (minor) direction of the fluid chamber) of the fluid ejection head.

The fluid ejection head includes a nozzle plate 1, a flow channel plate 2, and a vibration plate member 3 stacked and bonded together. Moreover, the fluid ejection head includes a piezoelectric actuator 11 configured to displace the vibration plate member 3 and a frame member 20 serving as a common fluid chamber member.

The fluid ejection head includes individual fluid chambers 6, each surrounded by the nozzle plate 1, the flow channel plate 2, and the vibration plate member 3 and communicating with the nozzles 4 through which droplets of a fluid are ejected, a fluid resistance portion 7 configured to supply a fluid to the individual fluid chamber 6, and a fluid inlet portion 8 communicating with the fluid resistance portion 7.

A fluid is supplied from a common fluid chamber 10 of the frame member 20 to a plurality of individual fluid chambers 6 by passing through a filter portion 9 formed in the vibration plate member 3, the fluid inlet portion 8, and the fluid resistance portion 7.

The nozzle plate 1 includes nozzles 4 each having a diameter of from 10 $\mu$m to 35 $\mu$m that are formed corresponding to each of the individual fluid chambers 6. The nozzle plate 1 is bonded to the flow channel plate 2 with the resin layer. Moreover, a water repellent layer may be disposed on a surface of the nozzle plate 1 at the side from which droplets are ejected (a surface at an ejection side (an ejection surface), or an opposite surface relative to a surface at a side where the fluid chamber 6 is present).

Grooves constituting the individual fluid chambers 6, the fluid resistance portion 7, the fluid inlet portion 8, etc. are formed in the flow channel plate 2 by etching a metal plate (e.g., an SUS substrate) with an acid etching solution, or machining (e.g., stamping). The flow channel plate 2 may be formed of another member, such as a monocrystalline silicon substrate.

The vibration plate member 3 also functions as a wall surface member constituting a wall surface of the individual fluid chamber 6 of the flow channel plate 2, and as a filter member constituting the filter portion 9. The vibration plate member 3 has a multilayer structure including three layers, i.e., a first layer 3A, a second layer 3B, and a third layer 3C from the fluid chamber 6 side. The multilayer structure may include two layers or four or more layers. A deformable vibration region 30 is formed with the first layer 3A at a position corresponding to the individual fluid chamber 6.

The piezoelectric actuator 11 is disposed at an opposite side of the vibration plate member 3 to the side where the individual fluid chamber 6 is present. The piezoelectric actuator 11 includes an electrochemical energy conversion element as a driving element (actuator or pressure generator) configured to deform the vibration region 30 of the vibration

plate member 3.

Note that, the "driving element" is not limited to a piezoelectric actuator, and an electrostatic actuator including a vibration plate and a counter electrode may be also used as the driving element.

The piezoelectric actuator 11 includes a plurality of a piezoelectric laminate members 12 bonded to a base member 13 with an adhesive. The base member 13 is formed of a metal member. The predetermined number of piezoelectric columns 12A and 12B per one piezoelectric laminate member 12 are formed at the predetermined interval by grooving performed by half-cut dicing, thereby forming a pectinate shape.

The piezoelectric columns 12A and 12B of the piezoelectric laminate member 12 are identical. The piezoelectric column that is driven by applying voltage of a driving waveform may be referred to as a driving piezoelectric column (a driving column, which may be also referred to as a "driving element" hereinafter) 12A. The piezoelectric column that is used merely as a support column without applying voltage of a driving waveform may be referred to as a non-driving piezoelectric column (non-driving column) 12B, and is distinguished from the driving piezoelectric column 12A.

The driving column 12A is bonded to a projection 30a. The projection 30a is an isolated thick portion formed in the vibration region 30 of the vibration plate member 3. Moreover, the non-driving column 12B is bonded to a projection 30b that is a thick portion of the vibration plate member 3.

The piezoelectric member 12 includes piezoelectric layers and inner electrodes that are alternately laminated. The inner electrodes are each extended to the edge to form an external electrode, and are coupled with a first wiring member 15 (e.g., a flexible printed circuit (FPC) board) serving as a bendable flexible circuit board. The first wiring member 15 is configured to transmit driving signals to the external electrode of the driving column 12A. A second wiring member 16 is coupled to the first wiring member 15. The second wiring member 16 is composed of a flexible flat cable (FFC) with a metal shield member, serving as a flexible circuit board.

The frame member 20 is formed, for example, by injection molding an epoxy resin or polyphenylene sulfide that is a thermoplastic resin, and constitutes the common fluid chamber 10 to which a fluid is supplied from a head tank or a fluid cartridge (not illustrated).

In the fluid ejection head having the above-described configuration, for example, the driving columns 12A are contracted by reducing the voltage applied to the driving columns 12A from the reference potential. The contracted driving columns 12A cause the vibration region 30 of the vibration plate member 3 to move backward. The movement of the vibration region 30 causes a volume of the individual fluid chamber 6 to expand, which allows a fluid to flow into the individual fluid chamber 6.

Then, the voltage applied to the driving columns 12A is increased to expand the driving columns 12A in the laminating direction, thereby deforming the vibration region 30 of the vibration plate member 3 in the nozzle 4 direction. The deformation of the vibration region 30 causes the volume of the individual fluid chamber 6 to decrease so that the fluid in the individual fluid chamber 6 is pressurized to eject (jet) droplets of the fluid from the nozzles 4.

Then, the voltage applied to the driving columns 12A is return back to the reference potential so that the vibration region 30 of the vibration plate member 3 is returned to the initial position. As a result, the individual fluid chamber 6 is expanded to generate negative pressure, which causes the individual fluid chamber 6 to be filled with the fluid supplied from the common fluid chamber 10. After vibrations of a meniscus surface of the nozzle 4 are attenuated and stabilized, a subsequent operation of ejecting droplets will start.

Note that, a driving method of the fluid ejection head is not limited to the above-described example (pull-push mode). The fluid ejection head may be driven in a pull mode or a push mode by appropriately adjusting a driving waveform of voltage.

(Fluid ejection assembly)

The fluid ejection assembly of the present disclosure includes the fluid ejection head, and may further include a head tank configured to retain a fluid to be supplied to the fluid ejection head, a carriage on which the fluid ejection head is mounted, a supply mechanism configured to supply the fluid to the fluid ejection head, a maintenance recovery mechanism configured to perform maintenance and recovery of the fluid ejection head, and a main-scanning moving mechanism configured to move the fluid ejection head in a main-scanning direction, and other members or devices, as necessary.

In the fluid ejection assembly of the present disclosure, at least one selected from the group consisting of the head tank configured to retain a fluid to be supplied to the fluid ejection head, the carriage on which the fluid ejection head is mounted, the supply mechanism configured to supply the fluid to the fluid ejection head, the maintenance recovery mechanism configured to perform maintenance and recovery of the fluid ejection head, and the main-scanning moving mechanism configured to move the fluid ejection head in a main-scanning direction, and the fluid ejection head are mounted as an integrated assembly.

The "fluid ejection head" is identical to the fluid ejection head described in the above section of (Fluid ejection head), thus redundant description of the identical members and components may be omitted.

(Fluid ejection device)

The fluid ejection device includes the fluid ejection head or the fluid ejection assembly, and may further include other members or devices, as necessary.
The "fluid ejection head" and the "fluid ejection assembly" are identical to those described in the above sections of (Fluid ejection head) and (Fluid ejection assembly), thus redundant description of the identical members and components may be omitted.

<Other members or devices>

Other members or devices within the fluid ejection device are not particularly limited, and may be appropriately selected according to the intended purpose. Examples of the above-mentioned other members or devices include controllers.
The controller is not particularly limited, as long as the controller is capable of controlling movements of each of the members or devices. The controller may be appropriately selected according to the intended purpose. Examples of the controller include devices, such as sequencers and computers.

[Image forming apparatus]

The fluid ejection device of the present disclosure may be also used as an image forming apparatus for forming images.
The image forming apparatus may include an ink storage and the fluid ejection head, and may further include other members or devices.
The "fluid ejection head" is identical to the fluid ejection head described in the above section of (Fluid ejection head), thus redundant description of the identical members and components may be omitted.

<Ink storage>

The ink storage is a member configured to retain an ink. Examples of the ink storage include tanks and ink cartridges. Note that the "fluid" is an ink in the fluid ejection device.
The ink cartridge includes the ink and a container in which the ink is retained. The ink cartridge may further include appropriately selected other members. The container is not particularly limited, and a shape, structure, size, and material of the container may be appropriately selected according to the intended purpose. For example, an ink bag formed of an aluminum laminate film, a resin film, etc., may be suitably used as the container.
Recording media used for the image forming apparatus are not particularly limited, and may be appropriately selected from media available in the related art. Examples of the recording media include plain paper, gloss paper, special paper, threads, fibers, fabrics, leather, metals, plastics, glass, wood materials, ceramics, OHP sheets, and films.
An example of an inkjet recording device that is an image forming apparatus in which the fluid ejection head of the present disclosure is mounted will be described with reference to Figs. 7 to 9. Fig. 7 is a schematic side view illustrating an example of a mechanical section of the image forming apparatus according to the present disclosure. Fig. 8 is a schematic plan view illustrating another example of the mechanical section of the image forming apparatus according to the present disclosure. Fig. 9 is a schematic front view illustrating an example of the fluid ejection assembly of the present disclosure.
The illustrated image forming apparatus is a serial image forming apparatus, in which a carriage 233 is retained by main and sub-guide rods 231 and 232 in a manner such that the carriage 233 is slidable in a main-scanning direction. The guide rods 231 and 232 are guiding members passed between left and right side boards 221A and 221B. The carriage 233 is moved and scanned in a direction indicated with the arrow (carriage main-scanning direction) by a main-scanning motor (not illustrated) via a timing belt.
In the carriage 233, as illustrated in Fig. 7, a head assembly is mounted. The head assembly is a member in which a recording head 234 that is the fluid ejection head of the present disclosure, and a tank 235 that retains an ink to be supplied to the recording head 234 are mounted as an integrated assembly. The recording head 234 is arranged so that nozzle lines each formed of a plurality of nozzles are aligned in a sub-scanning direction perpendicular to the main-scanning direction, and an ink droplet ejection direction of the recording head 234 faces downward.
Each recording head 234 includes two nozzle lines. One nozzle line of the recording head 234a ejects droplets of a black (K) ink, and the other nozzle line ejects droplets of a cyan (C) ink. Moreover, one nozzle line of the recording head 234b ejects droplets of a magenta (M) ink, and the other nozzle line ejects droplets of a yellow (Y) ink. In Fig. 8, the two-head structure with which four colors of droplets are ejected is illustrated. However, four nozzle lines may be arranged in one head to eject four colors of droplets from one head.
An ink of each color is supplied from an ink cartridge 210 of each color (210k, 210c, 210m, 210y) to a respective

tank 235 of the recording head 234 by a supply member via a supply tube 236 for each color.

As a paper feeder for feeding sheets 242 stacked on a sheet stacking portion (platen) 241 of a paper feeding tray 202, a semi-circular driven roller (paper feeding driven roller) 243 configured to separate and feed the sheet 242 one by one from the sheet stacking portion 241, and a separation pad 244 facing the paper feeding roller 243 are disposed.

In order to send the sheet 242 fed from the paper feeder to the bottom side of the recording head 234, a guide 245 configured to guide the sheet 242, a counter roller 246, a transporting guide member 247, and a press member 248 including an edge press driven roller 249 are disposed. Moreover, a conveyor belt 251 is disposed. The conveyor belt 251 is a transporting device configured to electrostatically attract the fed sheet 242 to transport the sheet 242 to the position facing the recording head 234.

The conveyor belt 251 is an endless belt that is rotatably supported by a transporting roller 252 and a tension roller 253. The conveyor belt 251 is rotatable in a belt transporting direction (a sub-scanning direction). Moreover, a charging roller 256 configured to charge a surface of the conveyor belt 251 is disposed. The charging roller 256 is arranged in a manner such that the charging roller 256 is brought into contact with a surface of the conveyor belt 251 and is rotated by the rotation of the conveyor belt 251. The conveyor belt 251 travels along the loop in the belt transporting direction, as the transporting roller 252 is driven to rotate by a sub-scanning motor (not illustrated) via a timing belt.

As a paper ejector configured to eject the sheet 242 recorded by the recording head 234, a separation claw 261 configured to separate the sheet 242 from the conveyor belt 251, and a paper ejection driving roller 262 and a paper ejection driven roller 263 are disposed. A paper ejection tray 203 is disposed below the paper ejection driving roller 262.

A duplexer 271 is detachably mounted on the back portion of the device main body. The duplexer 271 is configured to receive the sheet 242 that is returned back in the reverse rotational direction to the rotational direction of the conveyor belt 251, reverse the side of the sheet 242, and again feed the sheet 242 between the counter roller 246 and the conveyor belt 251. Moreover, a bypass feeder 272 is disposed on a top surface of the duplexer 271.

A maintenance recovery mechanism 281 is disposed in a non-printing region at one side of the scanning direction of the carriage 233. The maintenance recovery mechanism 281 is configured to maintain and recover the state of the nozzles of the recording head 234.

The maintenance recovery mechanism 281 includes caps 282a and 282b each configured to cap a respective nozzle face of the recording head 234. Moreover, the maintenance recovery mechanism 281 includes a wiper member 283 configured to wipe the nozzle faces. In order to discharge the thickened recording fluid (ink), the maintenance recovery mechanism 281 further includes a spit receiver 284 configured to receive droplets discharged by spitting. The spitting is to discharge droplets that do not contribute to recording.

In a non-printing region at the other side of the scanning direction of the carriage 233, a spit receiver 288 is disposed. The spit receiver 288 is configured to receive droplets discharged by spitting. The spitting is performed by ejecting droplets that do not contribute to recording in order to discharge the recording fluid (ink) thickened during recording. The spit receiver 288 includes openings 289 corresponding to the nozzle lines of the recording head 234.

In the image forming apparatus having the above-described configuration, sheets 242 are separated and fed one by one from the paper feeding tray 202 to be guided by the guide 245, and the sheet 242 is inserted between the conveyor belt 251 and the counter roller 246 to be transported. A top end of the sheet 242 is guided by the transporting guide member 247, and is pressed against the conveyor belt 251 by the edge press driven roller 249, so that the transporting direction is changed at approximately 90°.

Once the sheet 242 is fed onto the charged conveyor belt 251, the sheet 242 is attracted to the conveyor belt 251, and the sheet 242 is transported in the sub-scanning direction by the movement of the conveyor belt 251 along the loop.

The recording head 234 is driven according to an image signal, while the carriage 233 is scanned, so that ink droplets are ejected onto the stopped sheet 242 to record for one line. After transporting the sheet 242 by the predetermined amount, recording for a next line is performed. As a stop signal for recording or a signal informing that the rear end of the sheet 242 has reached the recording region is received, the recording operation is ended, and the sheet 242 is discharged to the paper ejection tray 203.

As described above, the image forming apparatus includes the fluid ejection head of the present disclosure as a recording head, thus high quality images can be stably formed.

A material of the "sheet" is not limited to paper, and the "sheet" may include those referred to as a recording target, a recording medium, recording paper, or a recording sheet. Moreover, image formation, recording, letter printing, copying, and printing may be interchangeably used and are used for the same meaning.

The "fluid ejection device" includes an image forming apparatus, and encompasses a device configured to eject a fluid to a medium. Moreover, the "image" is not limited to a two-dimensional image, and may include an image applied to a three-dimensional medium, or an image formed by three-dimensionally shaping as a three-dimensional object.

The embodiment of the image forming apparatus includes both embodiments of a serial image forming apparatus and a line image forming apparatus, unless otherwise stated.

In the embodiment described above, the fluid ejection head of the present disclosure is used as the inkjet head. However, the fluid ejection head can be used to eject a fluid other than the ink, such as application as a fluid ejection head

configured to eject a fluid resist for patterning, and a fluid ejection head configured to eject a genetic analysis sample.

Examples

Examples of the present disclosure will be described hereinafter, but Examples shall not be construed as limiting the scope of the present disclosure in any way.

[Production of resin composition]

Components are mixed according to a composition presented in Tables 3 to 7 below to prepare a resin composition of each of Examples and Comparative Examples. The prepared resin composition was evaluated on the following items. A unit of an amount of each component presented in Tables 3 to 7 is part(s) by mass.

<Storage stability>

A complex viscosity of each resin composition at 25°C was measured by a viscoelasticity analyzer (rheometer, available from TA Instruments) to measure a viscosity change. The viscosity change from the start of the measurement to 1,000 seconds after the start of the measurement was measured, and the result was judged based on the following judgement criteria. The results are presented in Tables 3 to 7.

-Judgement criteria of storage stability-

Good: The viscosity change rate was less than 150%.
Fair: The viscosity change rate was 150% or greater and less than 200%
Not good: The viscosity change rate was 200% or greater.

<Dripping>

Each resin composition was applied to a glass substrate by a sag tester (sagging test or dripping test) so that an average thickness of the applied resin composition became in the range of 0.6 mm to 1 mm. Then, the glass substrate was lifted up vertically (parallel to the direction of gravity). After standing for 5 minutes, dripping of the resin composition was judged based on the following judgment criteria. The results are presented in Tables 3 to 7.

-Judgement criteria of dripping-

Good: Dripping of the resin composition did not occur.
Not good: Dripping of the resin composition occurred.

<Adhesion>

Each resin composition was applied to a SUS plate (available from Test Piece K.K.) by an applicator so that an average thickness of the applied resin composition became 100 μm. A copper foil having a width of 2.5 mm was placed on the applied resin composition in a manner such that a half portion of the copper foil was in contact with the resin composition, and the resin composition was cured at a curing temperature of 90°C for a curing time of 1 hour. Then, a 90° peel test was performed at a peeling speed of 0.2 mm/s by a universal bond tester 4000plus (available from Nordson Advanced Technology K.K.), and the adhesion was judged based on the following judgement criteria. The results are presented in Tables 3 to 7.

-Judgement criteria of adhesion-

Good: The adhesion strength was 1.1 N/mm or greater.
Fair: The adhesion strength was 0.5 N/mm or greater and less than 1.1 N/mm.

Not good: The adhesion strength was less than 0.5 N/mm

<Curability>

Each resin composition was applied to a steel plate by an applicator so that an average thickness of the applied resin composition became 100 μm. The applied resin composition was cured at a curing temperature of 90°C for a curing time of 1 hour. The curing state of the resultant composition was judged based on the following judgement criteria. The results are presented in Tables 3 to 7.

-Judgement criteria of curability-

Good: The resin composition was completely cured.
Not good: The resin composition was not cured, or not sufficiently cured.

<Swelling resistance>

A PTFE mold was filled with each resin composition, and the resin composition was heated and cured at a curing temperature of 90°C for a curing time of 3 hours, followed by releasing the cured resin composition from the mold to prepare a cured product (resin layer) of the resin composition having a width of 10 mm, a length of 500 mm, and a thickness of 1 mm. The obtained resin layer was immersed (50°C and 24 days) in an evaluation test solution prepared by mixing N-methylpyrrolidone and pure water at a ratio of 1:1. A swelling rate was calculated according to Equation 1 based on a mass of the resin layer before and after immersing the resin layer in the evaluation test solution. A swelling resistance was judged based on the following judgement criteria. The results are presented in Tables 3 to 7.

$$\text{Swelling rate(\%)} = [(\text{Mass after test} - \text{Mass before test})/\text{Mass before test}] \times 100 \qquad \text{[Equation 1]}$$

[Judgement criteria]

Very good: The swelling rate was less than 3%.
Good: The swelling rate is 3% or greater and less than 6%.
Fair: The swelling rate is 6% or greater and less than 10%.
Not good: The swelling rate is 10% or greater.

[Preparation of bonded part]

-Preparation of peel test piece-

First, a slit having a width of 140 μm and a length of 2,000 μm was formed in SUS304, which had been processed into a size having a length of 80 mm, a width of 17 mm, and a thickness of 400 μm, at a pitch of 150 dpi (dots per inch) by a precision press machine. Slits were continuously formed in the same manner as above at an interval of 42.3 μm to form a group of slits. Four lines of the group of slits were formed, to thereby prepare a peeling test piece. An adherable area of the peeling test piece was 64.7% relative to 100% of the area of the surface of the piece before the slits were formed.

-Bonding-

The resin composition was applied to the surface of the obtained peeling test piece, in which the slits were formed, by gravure coating so that an average thickness of the applied resin composition became 2.5 μm.

SUS304 rolled into a size having a length of 80 mm, a width of 19 mm, and a thickness of 20 μm was stacked on the surface of the peeling test piece to which the resin composition had been applied. The resultant stack was interposed between a pair of smooth glass substrates each having a length of 100 mm, a width of 25 mm, and a thickness of 2 mm, and a load of 20 N was applied. In the pressurized state as mentioned, the SUS304 and the peeling test piece were adhered and the resin composition was cured at a curing temperature of 90°C for a curing time of 3 hours. The average thickness of the resultant resin layer after the above-described bonding was 1.5 μm.

As described above, the peeling test sample was prepared.

-Preparation of Evaluation Ink 1-

Components were blended according to the composition presented in Table 1 below, and the resultant mixture was subjected to pressure filtration using a 0.8 μm-cellulose acetate membrane filter to remove coarse particles or dusts, to thereby prepare Evaluation Ink 1.

Table 1

| Components | | Amount [parts by mass] |
|---|---|---|
| Colorant | Pigment resin dispersing agent | 25.8 |
| Amide-based wetting agent | N-methyl-2-pyrrolidone | 25.0 |
| Alcohol-based compound | Glycerin | 10.0 |
| | 1,3-butanediol | 5.0 |
| Penetrant | 1,2-hexanediol | 2.0 |
| Surfactant | Silicone-based surfactant | 1.0 |
| Solvent | Pure water | 31.2 |

The product names and manufacturers' names of the above compounds are as follows.

Pigment resin dispersing agent: REGAL660R dispersion liquid (product name), available from Cabot Corporation
N-methyl-2-pyrrolidone: available from Mitsubishi Chemical Corporation
Glycerin: available from Sakamoto Yakuhin Kogyo Co., Ltd.
1,3-butanediol: available from Tokyo Chemical Industry Co., Ltd.
1,2-hexanediol: available from Tokyo Chemical Industry Co., Ltd.
Silicone-based surfactant: BYK-348 (product name), available from BYK Japan K.K.

-Preparation of Evaluation Ink 2-

Components were blended according to the composition presented in Table 2, and the resultant mixture was subjected to pressure filtration using a 0.8 μm-cellulose acetate membrane filter to remove coarse particles or dusts, to thereby prepare Evaluation Ink 2.

Table 2

| Components | | Amount [parts by mass] |
|---|---|---|
| Pigment | C.I. Pigment Black 7 | 4.0 |
| Dispersing agent | Solsperse37500 | 4.0 |
| Organic solvent | Ethylene glycol-N-butyl ether acetate | 59.0 |
| | Amyl propionate | 14.0 |
| | Cyclohexanone | 7.0 |
| | Dipropylene glycol monomethyl ether | 5.0 |
| | N-methyl-2-pyrrolidone | 1.0 |
| Surfactant | Fluorosurfactant | 2.0 |
| Resin | Methyl methacrylate/butyl methacrylate copolymer | 4.0 |

The product names and manufacturers' names of the above components are as follows.

C.I. Pigment Black 7: available from Mitsubishi Chemical Corporation
Solsperse 37500: available from The Lubrizol Corporation
Ethylene glycol-n-butyl ether acetate: available from Tokyo Chemical Industry Co., Ltd.
Amyl propionate: available from Tokyo Chemical Industry Co., Ltd.

Cyclohexanone: available from Tokyo Chemical Industry Co., Ltd.
Dipropylene glycol monomethyl ether: available from Tokyo Chemical Industry Co., Ltd.
N-methyl-2-pyrrolidone: available from Mitsubishi Chemical Corporation
Fluorosurfactant: BYK-340 (product name), available from BYK Japan K.K.
Methyl methacrylate/butyl methacrylate copolymer: Paraloid B60 (product name), available from Rohm and Haas

<Average peel strength before immersing in ink>

Peal strength was measured when each peel test sample was peeled by 5 mm in a 90°C angular direction at peel strength measuring speed of 1 mm/min by a tabletop material testing instrument (Tensilon STA-1150, available from A&D Company, Limited). The measurement was performed five times. The average peel strength was determined, and the average peel strength before immersing in the ink was evaluated based on the following judgement criteria. The results are presented in Tables 3 to 7.

[Judgement criteria]

Very good: The average peel strength was 1.5 N or greater.
Good: The average peel strength was 1.0 N or greater and less than 1.5 N.
Fair: The average peel strength was 0.5 N or greater and less than 1.0 N.
Not good: The average peel strength was less than 0.5 N.

<Average peel strength after immersing in ink>

A whole part of each peel test sample was immersed in each of Evaluation Inks 1 and 2 at 60°C for 60 days. After immersing the test sample in the ink, peel strength was measured in the same manner as in <Average peel strength before immersing in ink> above, and the peel strength was determined. The average peel strength after immersing in the ink was judged based on the following judgment criteria. The results are presented in Tables 3 to 7.

[Judgement criteria]

Very good: The average peel strength was 1.5 N or greater.
Good: The average peel strength was 1.0 N or greater and less than 1.5 N.
Fair: The average peel strength was 0.5 N or greater and less than 1.0 N.
Not good: The average peel strength is less than 0.5 N.

Table 3

| | | | | Ex. 1 | Ex. 2 | Ex. 3 | Ex. 4 |
|---|---|---|---|---|---|---|---|
| (A) | Epoxy resin | EP1 | aminophenol epoxy resin | 50 | 50 | 50 | 50 |
| | | EP2 | polyfunctional aromatic epoxy resin | 50 | 50 | 50 | 50 |
| | | EP3 | cyclopentadiene dimethanol-based epoxy resin | 10 | 10 | 10 | 10 |
| (B) | Episulfide resin | EPS1 | hydrogenated bisphenol A-bisepisulfide | 100 | 100 | 100 | 100 |
| (C) | Polythiol compound | T1 | Dipentaerythritol hexakis (3-mercaptopropionate) | 50 | 50 | 50 | 50 |
| | | T2 | 1,3,4,6-tetrakis(2-mercaptoethyl) glycoluril | 20 | 20 | 20 | 20 |

(continued)

| | | | | Ex. 1 | Ex. 2 | Ex. 3 | Ex. 4 |
|---|---|---|---|---|---|---|---|
| (D) | Filler | T805 | hydrophobic fumed titania treated with octylsilane | 15 | - | - | 5 |
| | | NKT90 | hydrophobic fumed titania treated with octylsilane | - | 15 | - | - |
| | | Alu C805 | hydrophobic fumed titania treated with organosilane | - | - | 15 | - |
| | | P25 | unmodified fumed titania | - | - | - | - |
| | | P90 | unmodified fumed titania | - | - | - | - |
| | | R805 | hydrophobic fumed silica | - | - | - | - |
| Other | Curing catalyst | IM1 | 3-(1-(2-methylimidazolyl))propyl carbamoyl-3-aminopropyltrimethoxysilane | 2 | 2 | 2 | 2 |
| Evaluations | Resin composition | storage stability | | Good | Good | Good | Good |
| | | dripping | | Good | Good | Good | Good |
| | | curability | | Good | Good | Good | Good |
| | | adhesion | | Good | Good | Good | Good |
| | Bonded part | swelling resistance | | Very good | Good | Good | Good |
| | | peel strength (before immersing in ink) | | Very good | Good | Good | Good |
| | | peel strength (after immersing in Ink 1) | | Very good | Good | Good | Fair |
| | | peel strength (after immersing in Ink 2) | | Very good | Good | Good | Fair |

Table 4

| | | | | Ex. 5 | Ex. 6 | Ex. 7 | Ex. 8 |
|---|---|---|---|---|---|---|---|
| (A) | Epoxy resin | EP1 | aminophenol epoxy resin | 50 | 50 | 50 | 50 |
| | | EP2 | polyfunctional aromatic epoxy resin | 50 | 50 | 50 | 50 |
| | | EP3 | cyclopentadiene dimethanol-based epoxy resin | 10 | 10 | 10 | 10 |
| (B) | Episulfide resin | EPS1 | hydrogenated bisphenol A-bisepisulfide | 100 | 100 | 100 | 100 |
| (C) | Polythiol compound | T1 | dipentaerythritolhexa kis(3-mercaptopropionate) | 50 | 50 | 50 | 50 |
| | | T2 | 1,3,4,6-tetrakis(2-mercaptoethyl)glycolu ril | 20 | 20 | 20 | 20 |

(continued)

| | | | | Ex. 5 | Ex. 6 | Ex. 7 | Ex. 8 |
|---|---|---|---|---|---|---|---|
| (D) | Filler | T805 | hydrophobic fumed titania treated with octylsilane | - | - | 20 | - |
| | | NKT90 | hydrophobic fumed titania treated with octylsilane | 5 | - | - | 20 |
| | | Alu C805 | hydrophobic fumed titania treated with organosilane | - | 5 | - | - |
| | | P25 | unmodified fumed titania | - | - | - | - |
| | | P90 | unmodified fumed titania | - | - | - | - |
| | | R805 | hydrophobic fumed silica | - | - | - | - |
| Other | Curing catalyst | IM1 | 3-(1-(2-methylimidazolyl))pro pylcar-bamoyl-3-aminopropyl-trimethoxysi-lane | 2 | 2 | 2 | 2 |
| Evalua -tions | Resin composition | storage stability | | Good | Good | Good | Good |
| | | dripping | | Good | Good | Good | Good |
| | | curability | | Good | Good | Good | Good |
| | | adhesion | | Good | Good | Good | Good |
| | Bonded part | swelling resistance | | Good | Good | Good | Good |
| | | peel strength (before immersing in ink) | | Good | Good | Fair | Fair |
| | | peel strength (after immersing in Ink 1) | | Fair | Fair | Fair | Fair |
| | | peel strength (after immersing in Ink 2) | | Fair | Fair | Fair | Fair |

Table 5

| | | | | Ex. 9 | Ex. 10 | Ex. 11 |
|---|---|---|---|---|---|---|
| (A) | Epoxy resin | EP1 | aminophenol epoxy resin | 50 | 50 | 50 |
| | | EP2 | polyfunctional aromatic epoxy resin | 50 | 50 | 50 |
| | | EP3 | cyclopentadiene dimethanol-based epoxy resin | 10 | 10 | 10 |
| (B) | Episulfide resin | EPS1 | hydrogenated bisphenol A-bisepisulfide | 100 | 50 | 200 |
| (C) | Polythiol compound | T1 | dipentaerythritolhexakis(3 -mercaptopropionate) | 50 | 50 | 50 |
| | | T2 | 1,3,4,6-tetrakis(2-mercaptoethyl)glycoluril | 20 | 20 | 20 |
| (D) | Filler | T805 | hydrophobic fumed titania treated with octylsilane | - | 15 | 15 |
| | | NKT90 | hydrophobic fumed titania treated with octylsilane | | | |
| | | AluC805 | hydrophobic fumed titania treated with organosilane | 20 | - | - |
| | | P25 | unmodified fumed titania | - | - | - |
| | | P90 | unmodified fumed titania | - | - | - |
| | | R805 | hydrophobic fumed silica | - | - | - |

(continued)

| | | | | Ex. 9 | Ex. 10 | Ex. 11 |
|---|---|---|---|---|---|---|
| Other | Curing catalyst | IM1 | 3-(1-(2-methylimidazolyl))propylcarbamoyl-3-aminopropyl-trimethoxysilane | 2 | 2 | 2 |
| Evaluations | Resin composition | storage stability | | Good | Good | Good |
| | | dripping | | Good | Good | Good |
| | | curability | | Good | Good | Good |
| | | adhesion | | Good | Good | Fair |
| | Bonded part | swelling resistance | | Good | Fair | Good |
| | | peel strength (before immersing in ink) | | Fair | Good | Fair |
| | | peel strength (after immersing in Ink 1) | | Fair | Good | Fair |
| | | peel strength (after immersing in Ink 2) | | Fair | Good | Fair |

Table 6

| | | | | Comp. Ex. 1 | Comp. Ex. 2 | Comp. Ex. 3 |
|---|---|---|---|---|---|---|
| (A) | Epoxy resin | EP1 | aminophenol epoxy resin | 50 | 50 | 50 |
| | | EP2 | polyfunctional aromatic epoxy resin | 50 | 50 | 50 |
| | | EP3 | cyclopentadiene dimethanol-based epoxy resin | 10 | 10 | 10 |
| (B) | Episulfide resin | EPS1 | hydrogenated bisphenol A-bisepisulfide | 100 | 100 | 100 |
| (C) | Polythiol compound | T1 | dipentaerythritolhexakis (3-mercaptopropionate) | 50 | 50 | 50 |
| | | T2 | 1,3,4,6-tetrakis(2-mercaptoethyl)glycoluril | 20 | 20 | 20 |
| (D) | Filler | T805 | hydrophobic fumed titania treated with octylsilane | - | - | - |
| | | NKT90 | hydrophobic fumed titania treated with octylsilane | - | - | - |
| | | Alu C805 | hydrophobic fumed titania treated with organosilane | - | - | - |
| | | P25 | unmodified fumed titania | 15 | - | - |
| | | P90 | unmodified fumed titania | - | 15 | - |
| | | R805 | hydrophobic fumed silica | - | - | 15 |
| Other | Curing catalyst | IM1 | 3-(1-(2-methylimidazolyl))propyl carbamoyl-3-aminopropyltrimethoxysilane | 2 | 2 | 2 |

(continued)

| | | | Comp. Ex. 1 | Comp. Ex. 2 | Comp. Ex. 3 |
|---|---|---|---|---|---|
| Evaluations | Resin composition | storage stability | Good | Good | Not good |
| | | dripping | Not good | Not good | Good |
| | | curability | Not good | Not good | Good |
| | | adhesion | Good | Good | Good |
| | Bonded part | swelling resistance | Good | Good | Good |
| | | peel strength (before immersing in ink) | Not good | Not good | Not good |
| | | peel strength (after immersing in Ink 1) | Not good | Not good | Not good |
| | | peel strength (after immersing in Ink 2) | Not good | Not good | Not good |

Table 7

| | | | | Comp. Ex. 4 | Comp. Ex. 5 | Comp. Ex. 6 |
|---|---|---|---|---|---|---|
| (A) | Epoxy resin | EP1 | aminophenol epoxy resin | 50 | 50 | 50 |
| | | EP2 | polyfunctional aromatic epoxy resin | 50 | 50 | 50 |
| | | EP3 | cyclopentadiene dimethanol-based epoxy resin | 10 | 10 | 10 |
| (B) | Episulfide resin | EPS1 | hydrogenated bisphenol A-bisepisulfide | - | - | - |
| (C) | Polythiol compound | T1 | dipentaerythritolhexakis (3-mercaptopropionate) | 50 | 50 | 50 |
| | | T2 | 1,3,4,6-tetrakis(2-mercaptoethyl)glycoluril | 20 | 20 | 20 |
| (D) | Filler | T805 | hydrophobic fumed titania treated with octylsilane | 15 | - | - |
| | | NKT90 | hydrophobic fumed titania treated with octylsilane | - | 15 | - |
| | | Alu C805 | hydrophobic fumed titania treated with organosilane | - | - | 15 |
| | | P25 | unmodified fumed titania | - | - | - |
| | | P90 | unmodified fumed titania | - | - | - |
| | | R805 | hydrophobic fumed silica | - | - | - |
| Other | Curing catalyst | IM1 | 3-(1-(2-methylimidazolyl))propyl carbamoyl-3-aminopropyl-trimethoxysilane | 2 | 2 | 2 |

(continued)

| | | | Comp. Ex. 4 | Comp. Ex. 5 | Comp. Ex. 6 |
|---|---|---|---|---|---|
| Evaluations | Resin composition | storage stability | Good | Good | Good |
| | | dripping | Good | Good | Good |
| | | curability | Good | Good | Good |
| | | adhesion | Good | Good | Good |
| | Bonded part | swelling resistance | Not good | Not good | Not good |
| | | peel strength (before immersing in ink) | Good | Good | Good |
| | | peel strength (after immersing in Ink 1) | Not good | Not good | Not good |
| | | peel strength (after immersing in Ink 2) | Not good | Not good | Not good |

The product names and manufacturers' names of the above components are as follows.

EP1: ADEKA RESIN EP-3950S [aminophenolepoxy resin (epoxy equivalent weight: 95g/eq), available from ADEKA CORPORATION]
EP2: EPPN-502H [aromatic polyfunctional epoxy resin (epoxy equivalent weight: 158 g/eq to 178 g/eq), available from Nippon Kayaku Co., Ltd.]
EP3: ADEKA RESIN EP-4088S [dicyclopentadiene dimethanol-based epoxy resin (epoxy equivalent weight: 165 g/eq), available from ADEKA CORPORATION]
EPS1: hydrogenated bisphenol A-bisepisulfide [available from Taoka Chemical Co., Ltd.]
T1: dipentaerythritolhexakis(3-mercaptopropionate) [available from SC Organic Chemical Co., Ltd.]
T2: 1,3,4,6-tetrakis(2-mercaptoethyl)glycoluril [available from SC Organic Chemical Co., Ltd.]
T805: AEROXIDE T805 [hydrophobic fumed titania surface-treated with octylsilane, available from Evonik Japan Co., Ltd.]
NKT90: AEROXIDE NKT90 [hydrophobic fumed titania surface-treated with organosilane, available from Evonik Japan Co., Ltd.]
AluC805: AEROXIDE AluC805 [hydrophobic fumed alumina surface-treated with octylsilane, available from Evonik Japan Co., Ltd.]
P25: AEROXIDE P25 [unmodified fumed titania, available from Evonik Japan Co., Ltd.]
P90: AEROXIDE P90 [unmodified fumed titania, available from Evonik Japan Co., Ltd.]
R805: AEROXIDE R805 [hydrophobic fumed silica, available from Evonik Japan Co., Ltd.]
IM-1: 2MUSIZ [3-(1-(2-methylimidazolyl))propylcarbamoyl-3-aminopropyl-trimethoxysilane, available from SHIKOKU CHEMICALS CORPORATION]

As it was made clear from Examples above, a resin layer having excellent swelling resistance and peel strength could be obtained by using hydrophobic titanium oxide and/or hydrophobic alumina in a composition including an epoxy resin, an episulfide resin, and a polythiol compound.

## Claims

**1.** A fluid ejection head (100), comprising:

a first member;
a second member;
a resin layer (113) that bonds the first member and the second member together, the resin layer (113) including a cured product of a resin composition; and
a flow channel (103) to which at least part of the resin layer (113) is exposed,

**characterized in that** the resin composition includes (A) an epoxy resin, (B) an episulfide resin, (C) a polythiol

compound, and (D) at least one of hydrophobic titanium oxide or hydrophobic alumina.

2. The fluid ejection head (100) according to claim 1,
wherein the (A) epoxy resin includes at least one selected from the group consisting of a polyglycidyl ether compound of a polyvalent phenol, a glycidylamino group-containing epoxy compound, and a polyglycidyl ether compound of dicyclopentadiene dimethanol.

3. The fluid ejection head (100) according to claim 1 or 2,
wherein the (B) episulfide resin includes an aromatic ring, or an alicyclic structure, or both.

4. The fluid ejection head (100) according to any one of claims 1 to 3,
wherein the (C) polythiol compound includes four or more thiol groups.

5. The fluid ejection head (100) according to any one of claims 1 to 4,
wherein the (D) at least one of hydrophobic titanium oxide or hydrophobic alumina includes an alkylsilane moiety.

6. The fluid ejection head (100) according to any one of claims 1 to 5,
wherein an amount of the (D) at least one of hydrophobic titanium oxide or hydrophobic alumina in the resin layer (113) is 0.1 parts by mass or greater and 20.0 parts by mass or less relative to 100.0 parts by mass of a sum of an amount of the (A) epoxy resin, an amount of the (B) episulfide resin, and an amount of the (C) polythiol compound in the resin layer (113).

7. A fluid ejection assembly, comprising:

   the fluid ejection head (100) according to any one of claims 1 to 6; and
   at least one selected from the group consisting of
   a head tank configured to store a fluid to be supplied to the fluid ejection head (100),
   a carriage (235) on which the fluid ejection head (100) is mounted,
   a supply mechanism configured to supply a fluid to the fluid ejection head (100),
   a maintenance recovery mechanism configured to perform maintenance and recovery of the fluid ejection head (100), and
   a main-scanning moving mechanism configured to move the fluid ejection head (100) in a main-scanning direction.

8. The fluid ejection assembly according to claim 7, wherein the fluid ejection head (100) is mounted as an integrated assembly with the at least one selected from the group consisting of the head tank, the carriage (233), the supply mechanism, the maintenance recovery mechanism, and the main-scanning moving mechanism.

9. A fluid ejection device, comprising:

   the fluid ejection head (100) according to any one of claims 1 to 6; and
   a controller.

10. A method for producing a fluid ejection head (100), the method comprising:

   applying a resin composition to a first member;
   bonding the first member and a second member together with the resin composition being interposed between the first member and the second member; and
   curing the resin composition to form a resin layer (113), thereby producing a fluid ejection head (100) including the first member, the second member, the resin layer (113) bonding the first member and the second member together, and a flow channel (103) to which at least part of the resin layer (113) is exposed,

**characterized in that** the resin composition includes (A) an epoxy resin, (B) an episulfide resin, (C) a polythiol compound, and (D) at least one of hydrophobic titanium oxide or hydrophobic alumina.

11. The method according to claim 10,
wherein an amount of the (D) at least one of hydrophobic titanium oxide or hydrophobic alumina in the resin layer (113) is 0.1 parts by mass or greater and 20.0 parts by mass or less relative to 100.0 parts by mass of a sum of an amount of

the (A) epoxy resin, an amount of the (B) episulfide resin, and an amount of the (C) polythiol compound in the resin layer (113).

## Patentansprüche

**1.** Fluidausstoßkopf (100), umfassend:

ein erstes Element;
ein zweites Element;
eine Harzschicht (113), die das erste Element und das zweite Element miteinander verbindet, wobei die Harzschicht (113) ein ausgehärtetes Produkt einer Harzzusammensetzung beinhaltet; und
einen Strömungskanal (103), dem mindestens ein Teil der Harzschicht (113) ausgesetzt ist,
**dadurch gekennzeichnet, dass** die Harzzusammensetzung (A) ein Epoxidharz, (B) ein Episulfidharz, (C) eine Polythiolverbindung und (D) mindestens eines von hydrophobem Titanoxid oder hydrophobem Aluminiumoxid beinhaltet.

**2.** Fluidausstoßkopf (100) nach Anspruch 1,
wobei das (A) Epoxidharz mindestens eines beinhaltet, ausgewählt aus der Gruppe, die aus einer Polyglycidyletherverbindung eines mehrwertigen Phenols, einer Glycidylaminogruppen enthaltenden Epoxidverbindung und einer Polyglycidyletherverbindung von Dicyclopentadiendimethanol besteht.

**3.** Fluidausstoßkopf (100) nach Anspruch 1 oder 2,
wobei das (B) Episulfidharz einen aromatischen Ring oder eine alicyclische Struktur oder beides beinhaltet.

**4.** Fluidausstoßkopf (100) nach einem der Ansprüche 1 bis 3,
wobei die (C) Polythiolverbindung vier oder mehr Thiolgruppen beinhaltet.

**5.** Fluidausstoßkopf (100) nach einem der Ansprüche 1 bis 4,
wobei (D) mindestens eines von hydrophobem Titanoxid oder hydrophobem Aluminiumoxid eine Alkylsilaneinheit beinhaltet.

**6.** Fluidausstoßkopf (100) nach einem der Ansprüche 1 bis 5,
wobei eine Menge von (D) mindestens einem von hydrophobem Titanoxid oder hydrophobem Aluminiumoxid in der Harzschicht (113) 0,1 Massenteile oder mehr und 20,0 Massenteile oder weniger relativ zu 100,0 Massenteilen einer Summe einer Menge des (A) Epoxidharzes, einer Menge des (B) Episulfidharzes und einer Menge der (C) Polythiolverbindung in der Harzschicht (113) beträgt.

**7.** Fluidausstoßanordnung, die Folgendes umfasst:

den Fluidausstoßkopf (100) nach einem der Ansprüche 1 bis 6; und
mindestens eines, ausgewählt aus der Gruppe, bestehend aus einem Kopftank, der dazu konfiguriert ist, ein Fluid zu speichern, das dem Fluidausstoßkopf (100) zugeführt werden soll,
einem Schlitten (235), auf dem der Fluidausstoßkopf (100) montiert ist,
einem Zufuhrmechanismus, der dazu konfiguriert ist, dem Fluidausstoßkopf (100) ein Fluid zuzuführen,
einem Wartungswiederherstellungsmechanismus, der dazu konfiguriert ist, Wartung und Wiederherstellung des Fluidausstoßkopfs (100) durchzuführen, und
einem Hauptabtastbewegungsmechanismus, der dazu konfiguriert ist, den Fluidausstoßkopf (100) in einer Hauptabtastrichtung zu bewegen.

**8.** Fluidausstoßanordnung nach Anspruch 7,
wobei der Fluidausstoßkopf (100) als eine integrierte Anordnung montiert ist mit dem mindestens einen aus der Gruppe ausgewählten, bestehend aus dem Kopftank, dem Schlitten (233), dem Versorgungsmechanismus, dem Wartungswiederherstellungsmechanismus und dem Hauptabtastbewegungsmechanismus.

**9.** Fluidausstoßvorrichtung, umfassend:

den Fluidausstoßkopf (100) nach einem der Ansprüche 1 bis 6; und

eine Steuereinheit.

**10.** Erzeugungsverfahren für einen Fluidausstoßkopf (100), wobei das Verfahren Folgendes umfasst:

Aufbringen einer Harzzusammensetzung auf ein erstes Element;
Verbinden des ersten Elements und eines zweiten Elements miteinander, wobei die Harzzusammensetzung zwischen dem ersten Element und dem zweiten Element eingefügt ist; und
Aushärten der Harzzusammensetzung zum Bilden einer Harzschicht (113), wodurch ein Fluidausstoßkopf (100) erzeugt wird, der das erste Element, das zweite Element, die Harzschicht (113), die das erste Element und das zweite Element miteinander verbindet, und einen Strömungskanal (103) beinhaltet, dem mindestens ein Teil der Harzschicht (113) ausgesetzt ist,
**dadurch gekennzeichnet, dass** die Harzzusammensetzung (A) ein Epoxidharz, (B) ein Episulfidharz, (C) eine Polythiolverbindung und (D) mindestens eines von hydrophobem Titanoxid oder hydrophobem Aluminiumoxid beinhaltet.

**11.** Verfahren nach Anspruch 10,
wobei eine Menge von (D) mindestens einem von hydrophobem Titanoxid oder hydrophobem Aluminiumoxid in der Harzschicht (113) 0,1 Massenteile oder mehr und 20,0 Massenteile oder weniger relativ zu 100,0 Massenteilen einer Summe einer Menge des (A) Epoxidharzes, einer Menge des (B) Episulfidharzes und einer Menge der (C) Polythiolverbindung in der Harzschicht (113) beträgt.

## Revendications

**1.** Tête d'éjection de fluide (100), comprenant :

un premier élément ;
un second élément ;
une couche de résine (113) qui lie le premier élément et le second élément ensemble, la couche de résine (113) incluant un produit durci d'une composition de résine ; et
un canal d'écoulement (103) auquel au moins une partie de la couche de résine (113) est exposée,
**caractérisée en ce que** la composition de résine inclut (A) une résine époxy, (B) une résine épisulfure, (C) un composé polythiol et (D) au moins un parmi l'oxyde de titane hydrophobe ou l'alumine hydrophobe.

**2.** Tête d'éjection de fluide (100) selon la revendication 1,
dans laquelle la (A) résine époxy inclut au moins un élément sélectionné dans le groupe consistant en un composé éther polyglycidylique d'un phénol polyvalent, un composé époxy contenant un groupe glycidylamino et un composé éther polyglycidylique de dicyclopentadiène diméthanol.

**3.** Tête d'éjection de fluide (100) selon la revendication 1 ou 2,
dans laquelle la (B) résine épisulfure inclut un cycle aromatique, ou une structure alicyclique, ou les deux.

**4.** Tête d'éjection de fluide (100) selon l'une quelconque des revendications 1 à 3,
dans laquelle le (C) composé polythiol inclut quatre groupes thiol ou plus.

**5.** Tête d'éjection de fluide (100) selon l'une quelconque des revendications 1 à 4,
dans laquelle le (D) au moins un parmi l'oxyde de titane hydrophobe ou l'alumine hydrophobe inclut une fraction alkylsilane.

**6.** Tête d'éjection de fluide (100) selon l'une quelconque des revendications 1 à 5,
dans laquelle une quantité du (D) au moins un parmi l'oxyde de titane hydrophobe ou l'alumine hydrophobe dans la couche de résine (113) est de 0,1 partie en masse ou plus et de 20,0 parties en masse ou moins par rapport à 100,0 parties en masse d'une somme d'une quantité de la (A) résine époxy, d'une quantité de la (B) résine épisulfure et d'une quantité du (C) composé polythiol dans la couche de résine (113).

**7.** Ensemble d'éjection de fluide, comprenant :

la tête d'éjection de fluide (100) selon l'une quelconque des revendications 1 à 6 ; et

au moins un élément sélectionné dans le groupe consistant en un réservoir de tête configuré pour stocker un fluide à fournir à la tête d'éjection de fluide (100),
un chariot (235) sur lequel est montée la tête d'éjection de fluide (100),
un mécanisme de fourniture configuré pour fournir un fluide à la tête d'éjection de fluide (100),
un mécanisme de récupération de maintenance configuré pour effectuer la maintenance et la récupération de la tête d'éjection de fluide (100), et
un mécanisme de déplacement de balayage principal configuré pour déplacer la tête d'éjection de fluide (100) dans une direction de balayage principal.

**8.** Ensemble d'éjection de fluide selon la revendication 7,
dans lequel la tête d'éjection de fluide (100) est montée comme un ensemble intégré avec le au moins un élément sélectionné dans le groupe consistant en le réservoir de tête, le chariot (233), le mécanisme de fourniture, le mécanisme de récupération de maintenance et le mécanisme de déplacement de balayage principal.

**9.** Dispositif d'éjection de fluide, comprenant :

la tête d'éjection de fluide (100) selon l'une quelconque des revendications 1 à 6 ; et
un dispositif de commande.

**10.** Procédé de production d'une tête d'éjection de fluide (100), le procédé comprenant :

l'application d'une composition de résine sur un premier élément ;
la liaison du premier élément et d'un second élément ensemble avec la composition de résine étant interposée entre le premier élément et le second élément ; et
le durcissement de la composition de résine pour former une couche de résine (113), produisant ainsi une tête d'éjection de fluide (100) incluant le premier élément, le second élément, la couche de résine (113) liant le premier élément et le second élément ensemble, et un canal d'écoulement (103) auquel au moins une partie de la couche de résine (113) est exposée,
**caractérisé en ce que** la composition de résine inclut (A) une résine époxy, (B) une résine épisulfure, (C) un composé polythiol et (D) au moins un parmi l'oxyde de titane hydrophobe ou l'alumine hydrophobe.

**11.** Procédé selon la revendication 10,
dans lequel une quantité du (D) au moins un parmi l'oxyde de titane hydrophobe ou l'alumine hydrophobe dans la couche de résine (113) est de 0,1 partie en masse ou plus et de 20,0 parties en masse ou moins par rapport à 100,0 parties en masse d'une somme d'une quantité de la (A) résine époxy, d'une quantité de la (B) résine épisulfure et d'une quantité du (C) composé polythiol dans la couche de résine (113).

FIG.1

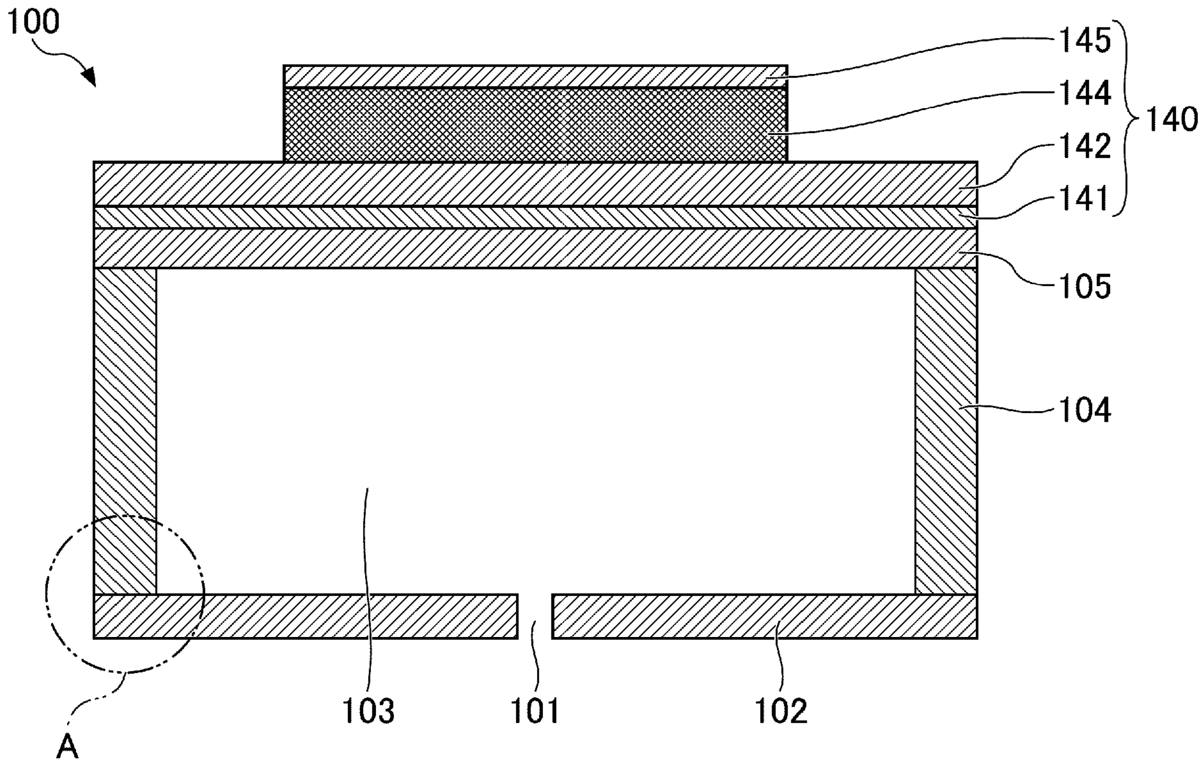

FIG.2

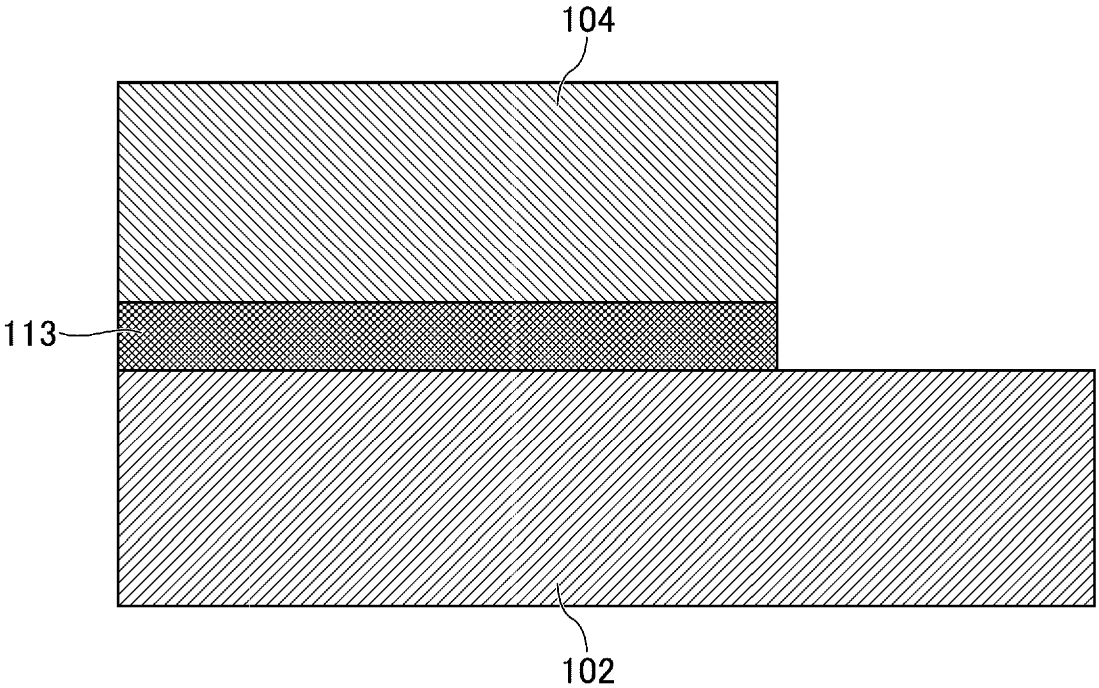


FIG.3

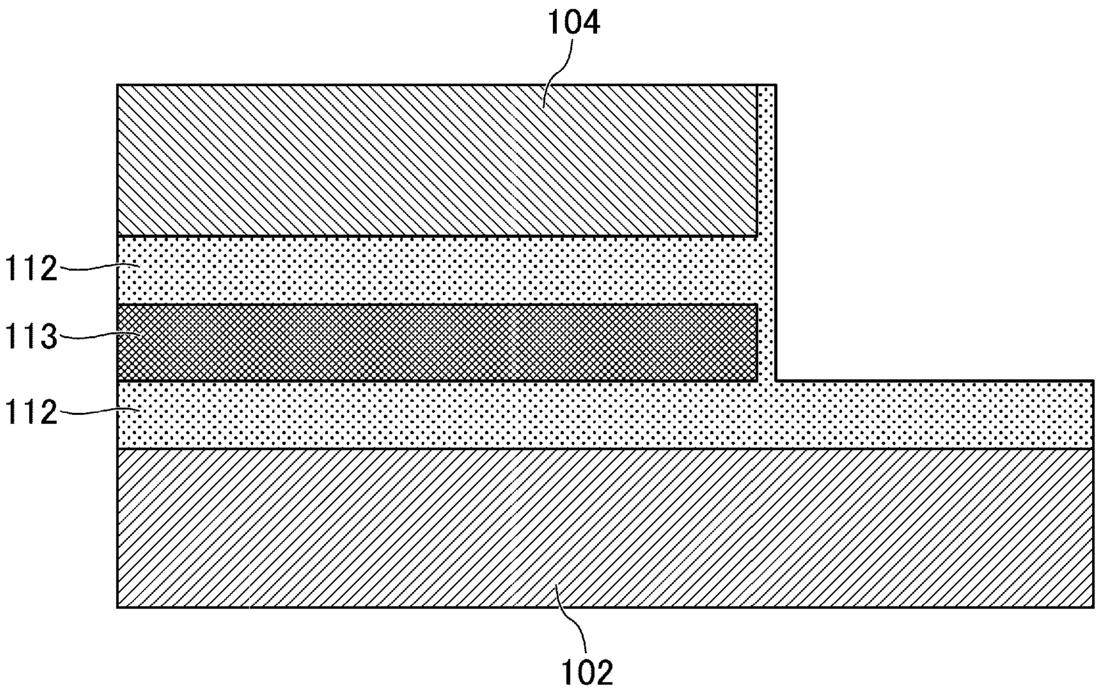

FIG.4

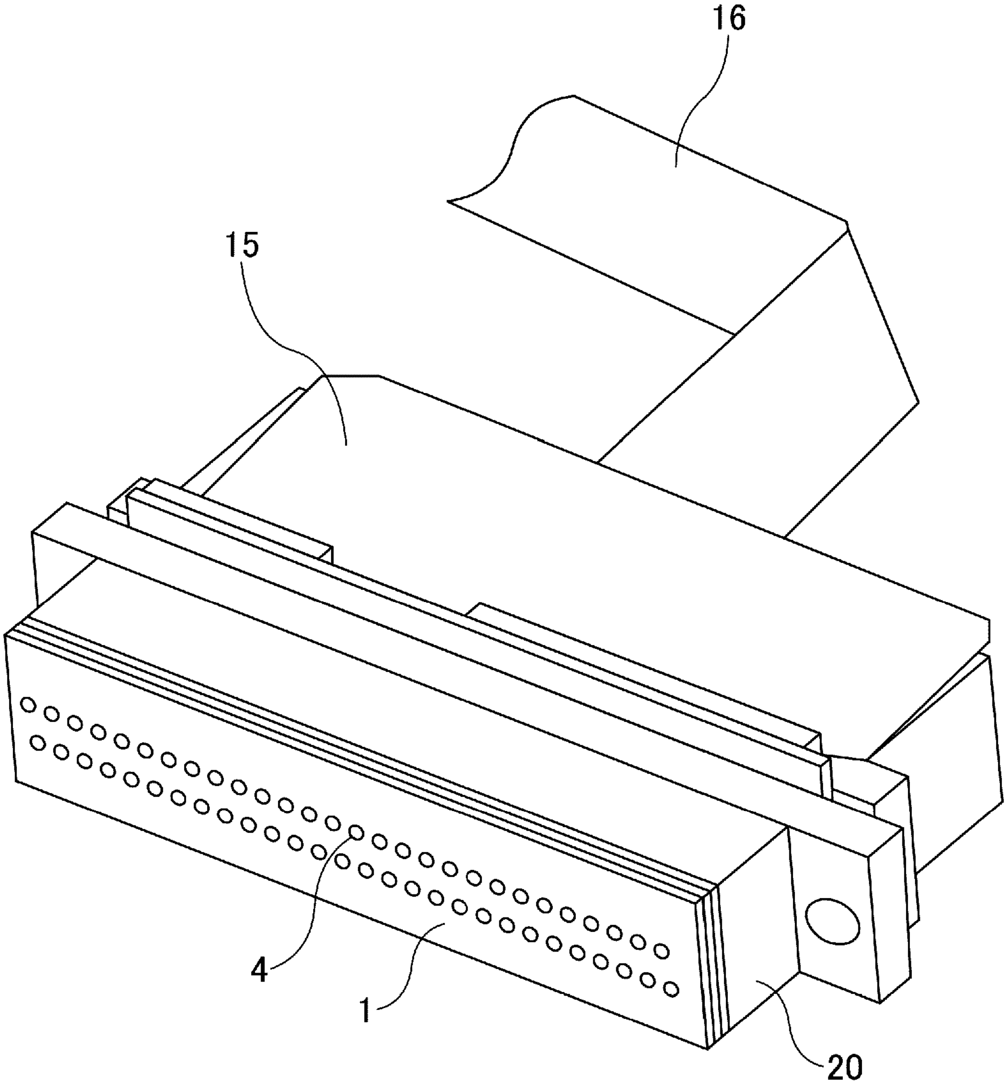

# FIG.5

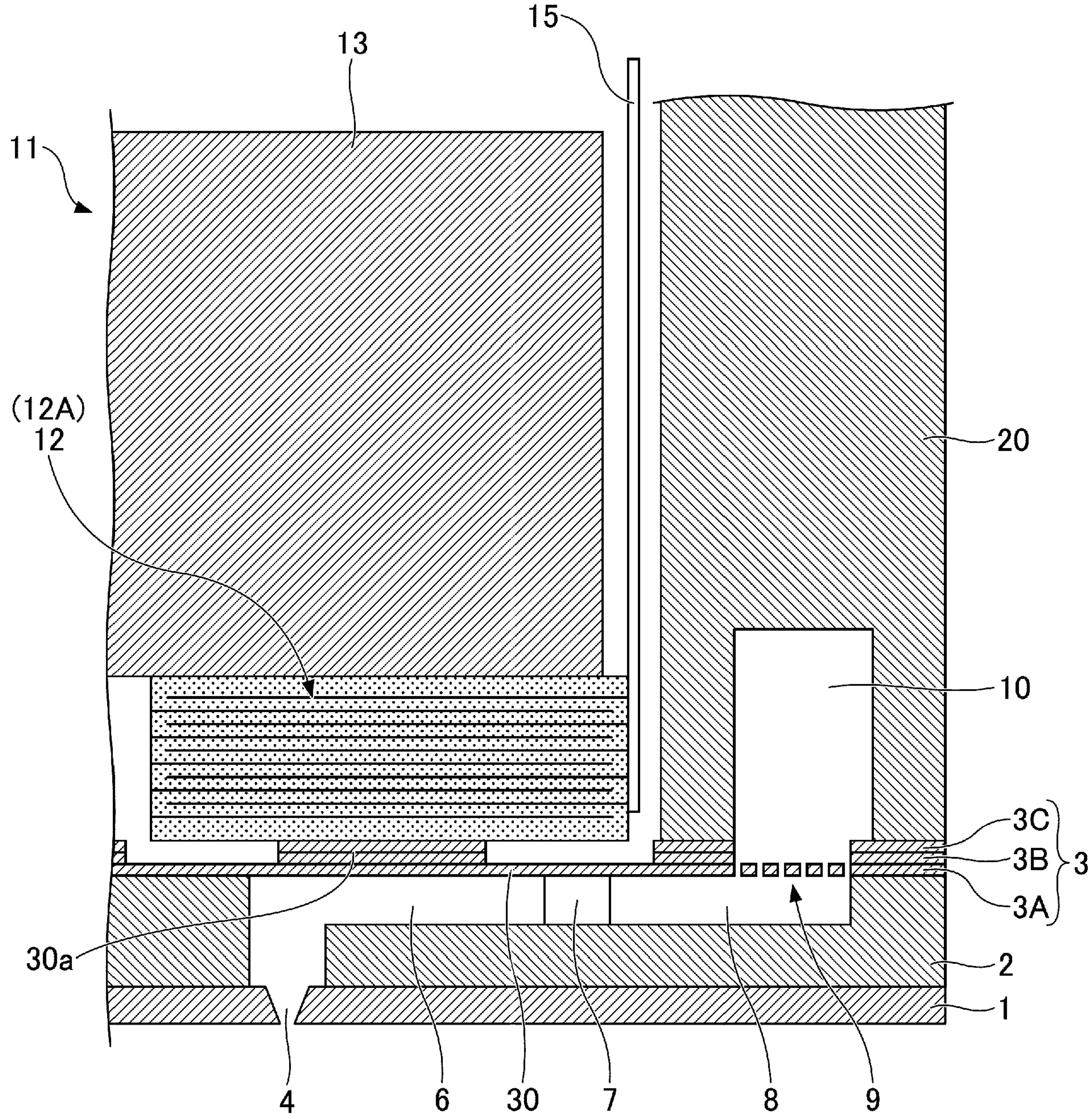

FIG.6

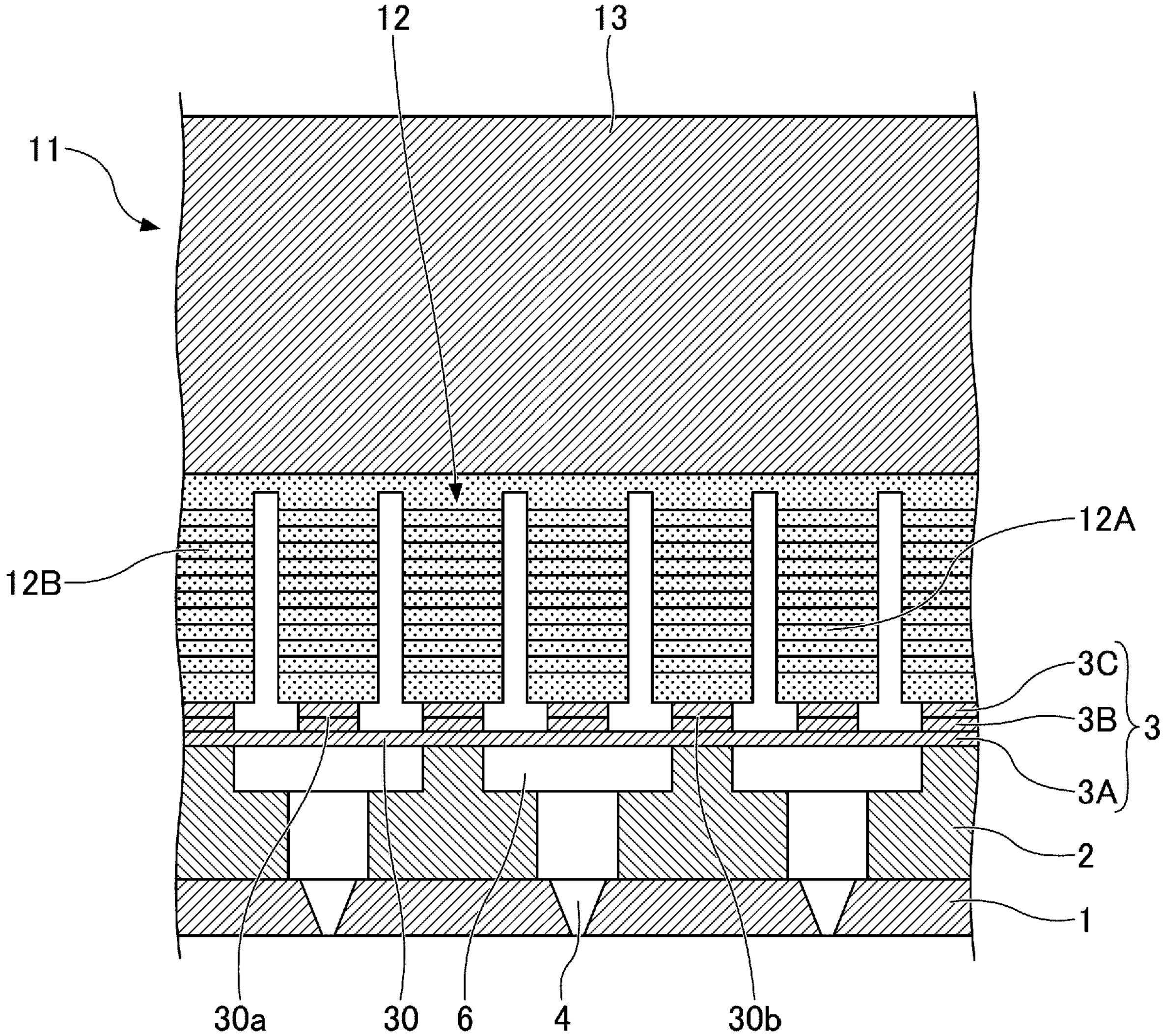

FIG.7

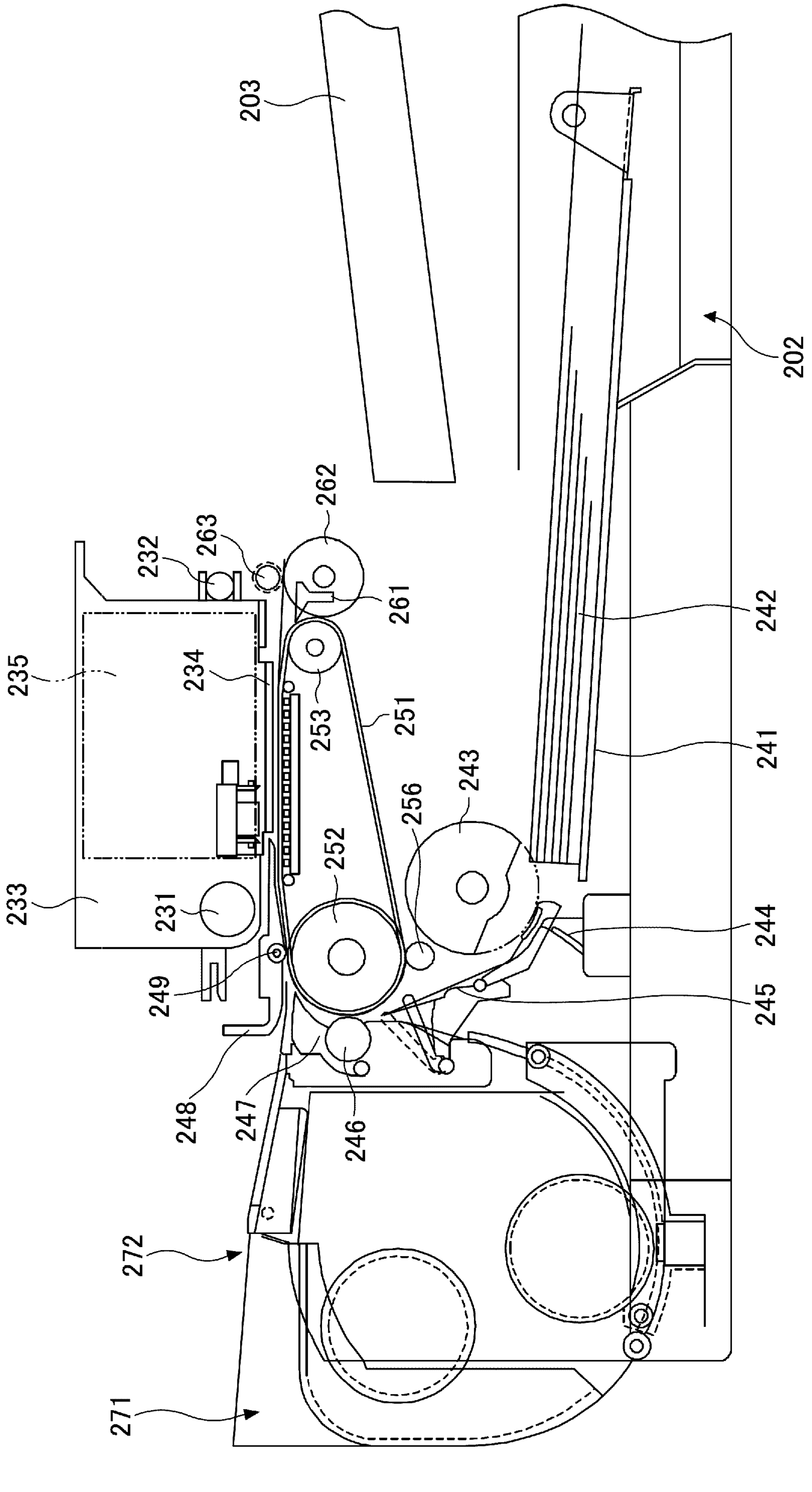
203
202
262
263
232
261
242
235
234
253
251
241
256
243
252
233
231
244
249
245
248
247
246
272
271

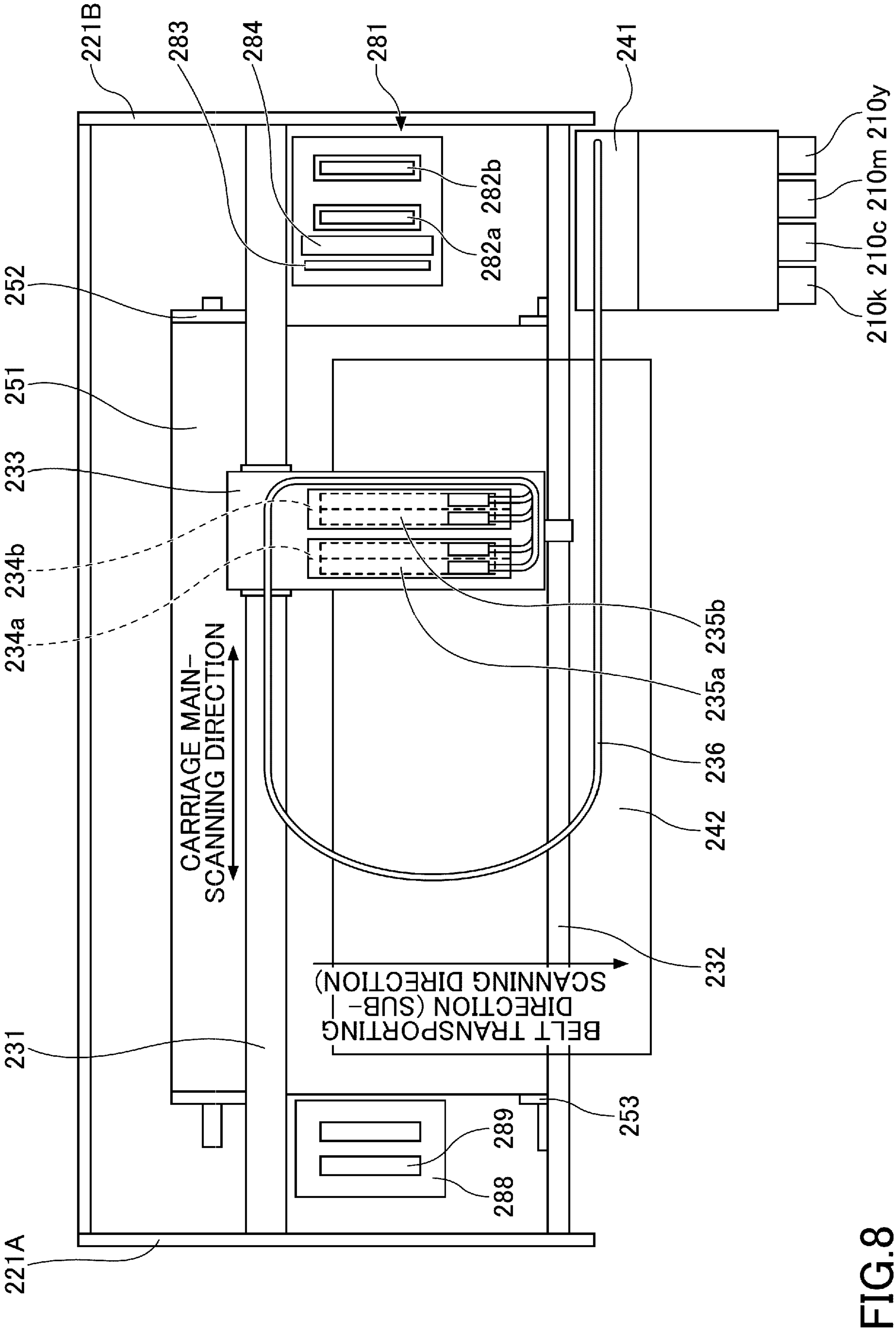
221B
283
284
281
241
282b
282a
210y
210m
210c
210k
252
251
233
234b
234a
235b
235a
236
242
232
231
253
289
288
221A
CARRIAGE MAIN-SCANNING DIRECTION
BELT TRANSPORTING DIRECTION (SUB-SCANNING DIRECTION)

FIG.8

FIG.9

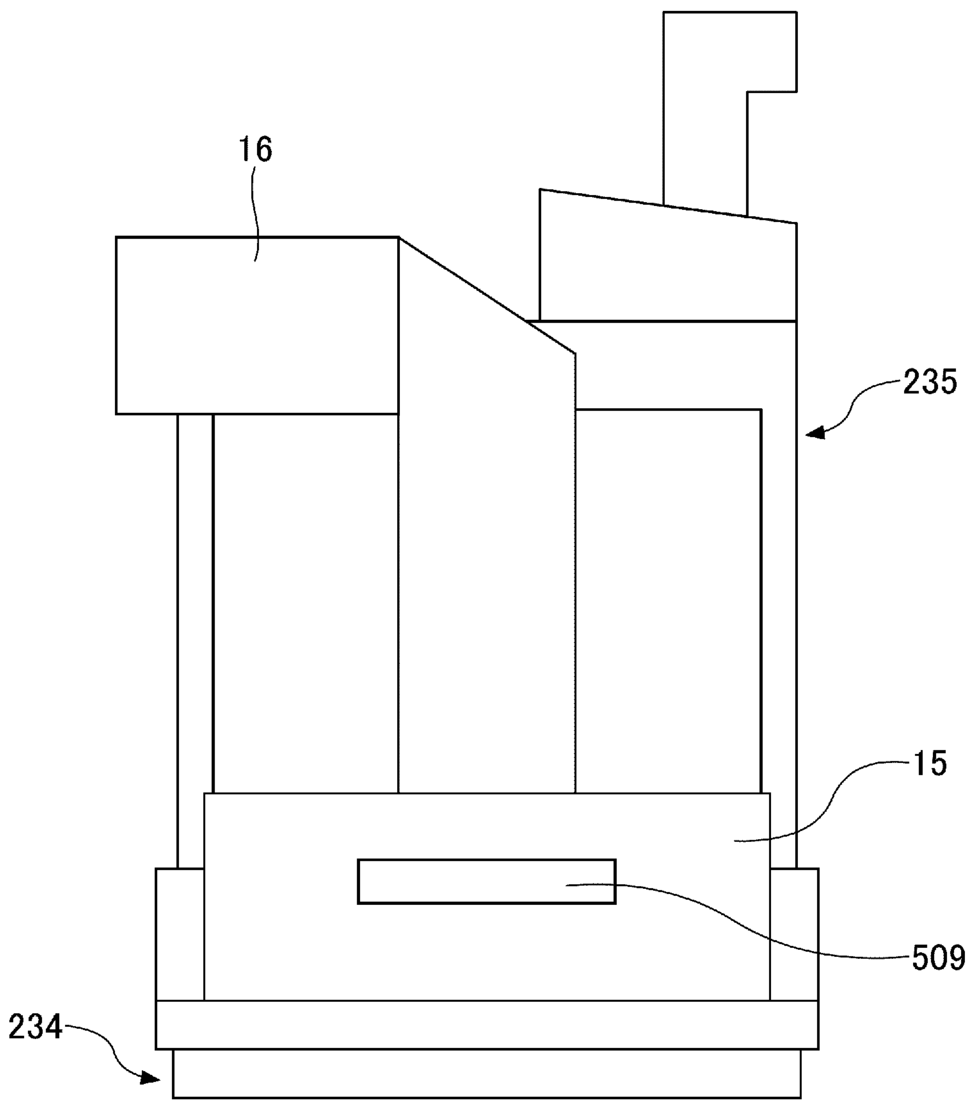

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006257350 A
- JP 2015030273 A
- JP 2015221541 A